(19) Europäisches Patentamt
European Patent Office
Office européen des brevets

(11) EP 3 366 727 B1

(12) EUROPEAN PATENT SPECIFICATION

(45) Date of publication and mention of the grant of the patent:
**24.02.2021 Bulletin 2021/08**

(21) Application number: **16857328.5**

(22) Date of filing: **11.10.2016**

(51) Int Cl.:
***C09B 67/46*** *(2006.01)* ***C08F 293/00*** *(2006.01)*
***C09B 67/20*** *(2006.01)* ***D06P 5/00*** *(2006.01)*
***D06P 5/30*** *(2006.01)* ***D06P 1/52*** *(2006.01)*
***C08F 297/02*** *(2006.01)* ***C08F 297/04*** *(2006.01)*
***C08K 5/00*** *(2006.01)* ***C08L 53/00*** *(2006.01)*
***D06P 1/14*** *(2006.01)* ***D06P 1/44*** *(2006.01)*
***C09D 11/03*** *(2014.01)* ***C09D 11/037*** *(2014.01)*
***C09D 11/107*** *(2014.01)* ***C09D 11/322*** *(2014.01)*

(86) International application number:
**PCT/JP2016/080077**

(87) International publication number:
**WO 2017/069013 (27.04.2017 Gazette 2017/17)**

(54) **PRINTING AGENT, PRINTING AGENT PRODUCTION METHOD, AND CLOTH ARTICLE**
DRUCKMITTEL, DRUCKMITTELHERSTELLUNGSVERFAHREN UND TUCHARTIKEL
AGENT D'IMPRESSION, SON PROCÉDÉ DE PRODUCTION, ET ARTICLE DE TYPE TEXTILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.10.2015 JP 2015205528**
**19.10.2015 JP 2015205527**

(43) Date of publication of application:
**29.08.2018 Bulletin 2018/35**

(73) Proprietor: **DIC Corporation**
**Tokyo 174-8520 (JP)**

(72) Inventors:
- **YAMAKAWA Kana**
**Kitaadachi-gun**
**Saitama 362-8577 (JP)**
- **KIMURA Toshihisa**
**Kitaadachi-gun**
**Saitama 362-8577 (JP)**
- **TOIDA Satoru**
**Kitaadachi-gun**
**Saitama 362-8577 (JP)**
- **FUJITA Kiyomi**
**Kitaadachi-gun**
**Saitama 362-8577 (JP)**
- **HASHIMOTO Satoshi**
**Kitaadachi-gun**
**Saitama 362-8577 (JP)**

(74) Representative: **Beckmann, Claus**
**Kraus & Weisert**
**Patentanwälte PartGmbB**
**Thomas-Wimmer-Ring 15**
**80539 München (DE)**

(56) References cited:
**WO-A1-2013/115071** **WO-A1-2015/072339**
**WO-A1-2015/072339** **JP-A- 2010 235 742**
**JP-A- 2011 237 769** **JP-A- 2015 105 361**
**JP-A- 2015 147 888** **US-A1- 2011 292 113**

- **DATABASE WPI Week 201129 Thomson Scientific, London, GB; AN 2011-D79434 XP002792048, -& JP 2011 074321 A (SEIKO EPSON CORP) 14 April 2011 (2011-04-14)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Technical Field

The present invention relates to a textile printing agent, a textile printing agent production method, and a cloth article.

Background Art

As a printing method for printing images of letters, pictures, patterns, or the like on a cloth, such as woven fabric, nonwoven fabric, or knitted fabric, for example, a pigment printing method using an aqueous pigment ink has been known. The pigment printing method is a method in which a substrate is printed with a textile printing agent that is a pigment composition including a coloring pigment and a binder resin, and then, if necessary, subjected to drying and curing step to fix the textile printing agent onto the substrate. As a method of printing in this method, there have been known a silk screen method in which the patterns of screen fabric are continuously printed on a cloth (see, for example, PTL 1), an ink-jet recording method in which an ink is jetted from a nozzle to be applied to a cloth (see, for example, PTL 2) and the like.

The textile printing agent can be prepared generally by diluting a high-concentration water dispersion of a pigment (which is frequently referred to as "aqueous pigment dispersion" or "pigment dispersion") with water and mixing the diluted dispersion with a binder resin and other additives. The pigment used in this case is water-insoluble, and hence the method of stably dispersing the pigment in water is studied.

As a method of dispersing a pigment for use in the printing application, there is a known method of using, as a pigment dispersant, a resin obtained by neutralizing an emulsion polymer having a molecular weight of 2, 000 to 20, 000 and having an alkyl (meth)acrylate monomer, an aliphatic vinyl monomer having a carboxyl group, and an aliphatic vinyl monomer having a crosslinkable functional group of a non-carboxyl group type by a basic substance (see, for example, PTL 3). This method uses a water-soluble binding agent having a crosslinkable functional group and performs a crosslinking reaction at 100°C or higher, and therefore needs a heating step.

With respect to the aqueous pigment dispersion which requires no heating step, in the field of ink-jet recording, there have been known, for example, a method in which a synthetic resin having a specific acid value, a base, and a colorant are mixed together in the presence of an organic solvent, such as a ketone solvent or an alcohol solvent, using a stirrer or a dispersing apparatus to cause the colorant to be dissolved or dispersed and the synthetic resin to be self-water-dispersible, and then the resultant coloring resin solution is mixed with an aqueous medium to disperse droplets of the self-water-dispersible resin solution containing the colorant in the aqueous medium (see, for example, PTL 4), a method in which a block polymer compound having a hydrophobic segment and a hydrophilic segment containing hydrophobic units and hydrophilic units is used as a pigment dispersant (see, for example, PTL 5), and a method in which an (An-Bm) block polymer is used as a pigment dispersant, wherein it is an A-B block polymer wherein A is styrene, B is acrylic acid, the polymerization degree of A is about 5 to about 50, and the polymerization degree of B is about 70 to about 800 (see, for example, PTL 6).

These methods are excellent as a method for producing an aqueous ink for ink-jet recording. However, when a textile printing agent is produced by the above method, coarse particles are likely to be generated in the produced textile printing agent. When printing using the textile printing agent containing coarse particles is performed by, for example, a screen method, it is likely that a white streak is caused in the printed portion. Further, when the printing is performed by an ink-jet method, the textile printing agent is likely to cause a discharge failure, thereby lowering the definition of the printed portion or the like.

By the way, a textile printing agent generally uses colors of yellow, magenta, cyan, and black, which are basic colors, in combination with colors of red, orange, green, blue, and the like, which are called spot colors and cannot be expressed by the basic colors. As a pigment for green color, polyhalogenated metallophthalocyanines, such as C.I. Pigment Green 36 and C.I. Pigment Green 7, have been known (see, for example, PTLs 7 and 8). As a pigment for red or orange color, diketopyrrolopyrrole pigments have been known (see, for example, PTLs 9 to 11).

However, the polyhalogenated metallophthalocyanine pigments and diketopyrrolopyrrole pigments have a large specific gravity or primary particle diameter, as compared to pigments used for basic colors, such as cyan, and therefore are likely to form coarse particles, thereby making it difficult to reduce the formation of coarse particles to a level comparable to that of the textile printing agent for basic colors.

Further, the formation of the coarse particles is generally caused due to an interaction between the type of the pigment and the dispersing resin. Therefore, even when the dispersing resin for use in the pigment dispersion for basic color is used in combination with the above-mentioned pigment for spot color, it is not always possible to suppress the formation of coarse particles. Thus, suppressing the formation of coarse particles in the textile printing agent for spot color likely needs trial and error made by those skilled in the art.

Citation List

Patent Literature

[PTL 1] JP-A-2007-332523
[PTL 2] JP-A-2009-215506
[PTL 3] JP-A-2012-251062
[PTL 4] JP-A-08-183920
[PTL 5] JP-A-2008-195769
[PTL 6] JP-A-10-7955
[PTL 7] WO99/05230
[PTL 8] JP-A-2011-74321
[PTL 9] JP-A-2015-113366
[PTL 10] JP-A-2014-136709
[PTL 11] JP-A-2012-207106 JP2011074321A discloses the use of C.I pigment green 36 in an ink composition for inkjet textile printing.

US 2011/292113A1 discloses and ink-jet ink for textile printing comprising a red diketopyrrolopyrrole pigment.

WO2015/072339A1 and JP2015105361A disclose pigment dispersion for ink composition comprising a polymer A according to claim 1 of the present invention, the phthalocyanine pigments disclosed in these documents are not according to the present invention.

Summary of Invention

Technical Problem

An object to be achieved by the present invention is to provide a textile printing agent which suppresses the formation of coarse particles, thereby making it possible to prevent generation of a white streak in the printed image or prevent the definition of the printed image from becoming poor, and to form a printed portion having excellent fastness to washing and excellent (dry and wet) fastness to rubbing.

Solution to Problem

The present inventors have found that a textile printing agent having dispersed therein a polyhalogenated metallophthalocyanine pigment or a diketopyrrolopyrrole pigment using a pigment dispersant containing a specific polymer (A) can achieve the above-mentioned object.

Specifically, the present invention is directed to a textile printing agent including a polyhalogenated metallophthalocyanine pigment or a diketopyrrolopyrrole pigment; water; an organic solvent; a binder resin; and, as a pigment dispersant, a polymer (A) having an anionic group, a solubility in water of 0.1 g/100 ml or less, and a number average molecular weight of 1, 000 to 6, 000, wherein the polymer (A) forms fine particles having a particle diameter of 5 to 1000 nm in water when the polymer (A) is neutralized such that the neutralization rate of the anionic group by a basic compound is 100%.

In addition, the present invention is directed to a cloth article which is printed with the above-mentioned textile printing agent.

Further, the present invention is directed to a method for producing a textile printing agent, the method including, in this order, the step of obtaining a dispersion containing a polymer (A), a basic compound, a water-soluble organic solvent, and a polyhalogenated metallophthalocyanine pigment or a diketopyrrolopyrrole pigment, wherein the polymer (A) has an anionic group, a solubility in water of 0.1 g/100 ml or less, and a number average molecular weight of 1,000 to 6, 000, and which forms fine particles having a particle diameter of 5 to 1000 nm in water when the polymer (A) is neutralized such that the neutralization rate of the anionic group by a basic compound is 100%; the step of mixing the dispersion with water to obtain an aqueous pigment dispersion; and the step of mixing the aqueous pigment dispersion, a diluent solvent, a binder resin, and an additive.

Advantageous Effects of Invention

The textile printing agent of the present invention suppresses the formation of coarse particles, thereby making

it possible to prevent generation of a white streak in the printed image or prevent the definition of the printed image from becoming poor, and to form a printed portion having excellent fastness to washing and excellent (dry and wet) fastness to rubbing. Further, the textile printing agent of the present invention can effectively prevent generation of a white streak and the like even when printing is performed by a silk screen method or an ink-jet recording method. Description of Embodiments

(Polyhalogenated metallophthalocyanine pigment)

The polyhalogenated metallophthalocyanine pigment is a pigment obtained by halogenating a metallophthalocyanine, and, for example, there can be mentioned polychloro copper phthalocyanine, polybromo copper phthalocyanine, polybromochloro copper phthalocyanine, polychloro zinc phthalocyanine, polybromo zinc phthalocyanine, and polybromochloro zinc phthalocyanine.

The polyhalogenated metallophthalocyanine is changed in hue from blue to green as the number of chlorine atoms and/or bromine atoms in the molecule is increased. For obtaining a textile printing agent of a green color, it is preferred to use the polyhalogenated metallophthalocyanine having in the molecule thereof 8 or more chlorine atoms and/or bromine atoms in total.

For achieving a green color which is more yellowish and higher in brightness, it is preferred to use the polyhalogenated metallophthalocyanine having a structure in which 8 to 15 chlorine atoms and/or bromine atoms in total are bonded to 4 benzene rings per one polyhalogenated metallophthalocyanine molecule (structure), and hydrogen atoms are bonded to the remaining positions of the benzene rings, it is more preferred to use the polyhalogenated metallophthalocyanine having a structure in which 9 to 15 chlorine atoms and/or bromine atoms in total are bonded to the above benzene rings, and hydrogen atoms are bonded to the remaining positions of the benzene rings, and it is especially preferred to use the polyhalogenated metallophthalocyanine having a structure in which 13 to 15 bromine atoms are bonded to the remaining positions of the above benzene rings, and hydrogen atoms are bonded to the remaining positions of the benzene rings.

Specifically, with respect to the polyhalogenated metallophthalocyanine, a pigment represented by the following general formula (2) can be used.

[Chem. 1]

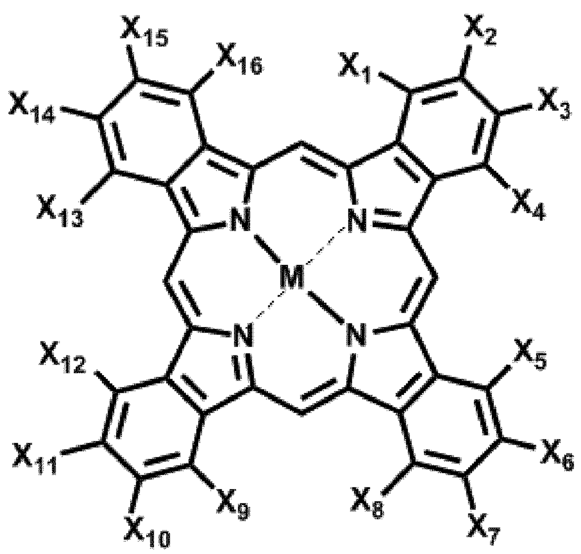

(2)

In the general formula (2), M is copper or zinc, and each of $X_1$ to $X_{16}$ is independently a chlorine atom, a bromine atom, or a hydrogen atom, with the proviso that the total of the chlorine atoms and bromine atoms which are bonded to the rings is 8 to 15 and hydrogen atoms are bonded to the remaining positions of the rings.

In the present invention, any polyhalogenated metallophthalocyanine pigment can be used without a particular limitation as long as it satisfies the general formula (2), and a plurality of the pigments which satisfy the general formula (2) may be used in combination.

Specific examples include C.I. Pigment Green 7 which corresponds to the general formula (2) wherein M is copper and $X_1$ to $X_{16}$ are a chlorine atom and a hydrogen atom, C.I. Pigment Green 36 which corresponds to the general formula (2) wherein M is copper and $X_1$ to $X_{16}$ are a chlorine atom, a bromine atom, and a hydrogen atom, and C.I.

Pigment Green 58 which corresponds to the general formula (2) wherein M is zinc and $X_1$ to $X_{16}$ are a chlorine atom, a bromine atom, and a hydrogen atom, and these can be used individually or in combination. The polyhalogenated metallophthalocyanine pigment may be either in the form of a dry pigment which is powdery, granular, or bulk, or in the form of a wet cake or a slurry.

The polyhalogenated metallophthalocyanine pigment may contain a pigment derivative as a dispersing agent.

With respect to the pigment derivative, general-purpose pigment derivatives, such as phthalocyanine pigment derivatives, quinacridone pigment derivatives, diketopyrrolopyrrole pigment derivatives, anthraquinone pigment derivatives, and thiazine pigment derivatives, can be used. Examples of derivative portions include a phthalimidomethyl group, a sulfonic acid group, an N-(dialkylamino)methyl group, and an N-(dialkylaminoalkyl)sulfonic acid amide group. Two or more different types of these derivatives can be used in combination. With respect to the amount of the pigment derivative used, there is no particular limitation, but, for example, the amount of the pigment derivative used is preferably 4 to 17 parts by mass, more preferably 6 to 13 parts by mass, relative to 100 parts by mass of the polyhalogenated metallophthalocyanine pigment.

The polyhalogenated metallophthalocyanine pigment having a particle diameter of 25 μm or less is preferably used, and the polyhalogenated metallophthalocyanine pigment having a particle diameter of 1 μm or less is especially preferably used. By using the polyhalogenated metallophthalocyanine pigment having a particle diameter in the above-mentioned range, settling of the polyhalogenated metallophthalocyanine pigment can be suppressed and coarse particles can be reduced, so that the pigment dispersibility can be improved. With respect to the particle diameter, for example, a value as measured using a transmission electron microscope (TEM) or a scanning electron microscope (SEM) can be employed.

The polyhalogenated metallophthalocyanine pigment having a specific gravity of 4.5 or less is preferably used, and the polyhalogenated metallophthalocyanine pigment having a specific gravity of 4 . 0 or less is especially preferably used. The specific gravity of the polyhalogenated metallophthalocyanine pigment is large, as compared to the specific gravity of the pigments used in pigment dispersions and inks for the basic colors (cyan, magenta, yellow, and black), and therefore it is likely that it is more difficult to impart dispersion stability to the polyhalogenated metallophthalocyanine pigment than to the pigments for basic colors. By using the polyhalogenated metallophthalocyanine pigment even having a specific gravity in the above-mentioned range and the above-mentioned specific polymer (A) in combination, the polyhalogenated metallophthalocyanine pigment is unlikely to settle and it is possible to reduce coarse particles to a level comparable to that of the pigment dispersion for basic colors, so that generation of a white streak in the printed image or deterioration of the definition of the printed image can be further effectively prevented, thereby making it possible to impart very excellent pigment dispersibility and discharge stability to the textile printing agent.

(Diketopyrrolopyrrole pigment)

Specific examples of diketopyrrolopyrrole pigments include C.I. Pigment Red 254, C.I. Pigment Red 255, C.I. Pigment Red 264, C.I. Pigment Red 270, C.I. Pigment Red 272, Pigment Orange 71, C.I. Pigment Orange 73, Pigment Orange 81, and a mixture or solid solution of two or more pigments selected from these pigments. From the viewpoint of the hue and coloring power, more preferred are C.I. Pigment Red 254 and C.I. Pigment Red 255. The diketopyrrolopyrrole pigments can be used individually or in combination. The pigment may be either in the form of a dry pigment which is powdery, granular, or bulk, or in the form of a wet cake or a slurry.

The diketopyrrolopyrrole pigment having a primary particle diameter of 30 to 250 nm is preferably used, and the diketopyrrolopyrrole pigment having a primary particle diameter of 50 to 200 nm is especially preferably used. The diketopyrrolopyrrole pigment which is finely divided to too high an extent has a property that the pigment is likely to undergo crystal growth due to an intermolecular hydrogen bond, and therefore generally, the diketopyrrolopyrrole pigment has a tendency that coarse particles are likely formed with the passage of time to cause the dispersibility to be poor. In the present invention, preferably by using the diketopyrrolopyrrole pigment having a primary particle diameter in the above-mentioned range and the above-mentioned specific polymer (A) in combination, settling of the diketopyrrolopyrrole pigment can be suppressed and it is possible to reduce coarse particles to a level comparable to that of the pigment dispersion for basic colors, so that generation of a white streak in the printed image or deterioration of the definition of the printed image can be further effectively prevented, thereby making it possible to impart very excellent pigment dispersibility and discharge stability to the textile printing agent.

The diketopyrrolopyrrole pigment may contain a pigment derivative as a dispersing agent.

With respect to the pigment derivative, general-purpose pigment derivatives, such as phthalocyanine pigment derivatives, quinacridone pigment derivatives, diketopyrrolopyrrole pigment derivatives, anthraquinone pigment derivatives, and thiazine pigment derivatives, can be used. Examples of derivative portions include a phthalimidomethyl group, a sulfonic acid group, an N-(dialkylamino)methyl group, and an N-(dialkylaminoalkyl)sulfonic acid amide group. Two or more different types of these derivatives can be used in combination. With respect to the amount of the pigment derivative used, there is no particular limitation, but, for example, the amount of the pigment derivative used is preferably 4 to 17

parts by mass, more preferably 6 to 13 parts by mass, relative to 100 parts by mass of the polyhalogenated metallophthalocyanine pigment.

(Polymer (A))

In the present invention, as a pigment dispersant, a polymer (A) having a number average molecular weight of 1, 000 to 6, 000 is used, wherein the solubility of the polymer (A) in water is 0.1 g/100 ml or less and the polymer (A) forms fine particles in water when the polymer (A) is neutralized such that the neutralization rate of the anionic group by a basic compound is 100%.

(Solubility in water)

In the present invention, the solubility of the polymer (A) in water is defined as follows. Specifically, 0.5 g of a polymer, of which the particle diameter had been controlled to be of from 250 to 90 μm using sieves respectively having a sieve opening of 250 μm and a sieve opening of 90 μm, was contained in a bag obtained by processing a 400-mesh metal mesh, and immersed in 50 ml of water and allowed to stand at a temperature of 25°C for 24 hours while gently stirring. After being immersed for 24 hours, the 400-mesh metal mesh containing therein the polymer was dried in a dryer set to 110°C for 2 hours. With respect to the 400-mesh metal mesh containing therein the polymer before and after the immersion in water, a change of the weight was measured, and a solubility of the polymer was calculated from the following equation.

[Math. 1]

$$\text{Solubility (g/100 ml)} = (\text{Polymer-containing 400-mesh metal mesh before immersion (g)} - \text{Polymer-containing 400-mesh metal mesh after immersion (g)}) \times 2$$

(Fine particles)

In the present invention, whether or not the polymer forms fine particles in water when the polymer (A) is neutralized such that the neutralization rate of the anionic group by a basic compound is 100% was judged by the method described below.

(1) An acid value of a polymer was preliminarily measured by an acid value measurement method in accordance with JIS test method K 0070-1992. Specifically, 0.5 g of a polymer was dissolved in tetrahydrofuran (hereinafter, frequently referred to as "THF") solvent, and the resultant solution was subjected to titration with a 0.1 M alcohol solution of potassium hydroxide using phenolphthalein as an indicator to determine an acid value.
(2) 1 g of the polymer was added to 50 ml of water, and then a 0.1 mol/L aqueous solution of potassium hydroxide in such an amount that the above-determined acid value of the polymer is 100% neutralized was added to the resultant mixture to neutralize the mixture 100%.
(3) The 100% neutralized mixture was irradiated with ultrasonic waves in an ultrasonic cleaner (Ultrasonic cleaner US-102, manufactured by SND Co., Ltd.; 38 kHz self-induced oscillation) at a temperature of 25°C for 2 hours, and then allowed to stand at room temperature for 24 hours.

After allowed to stand for 24 hours, a sample liquid was taken from the liquid at a depth of 2 centimeters from the surface of the resultant mixture, and, using a dynamic light-scattering particle diameter distribution measurement apparatus (dynamic light-scattering particle diameter measurement apparatus "Microtrac particle size distribution analyzer UPA-ST150", manufactured by Nikkiso Co., Ltd.), the sample liquid was checked as to whether light scattering information due to the formation of fine particles was obtained, judging whether or not fine particles were present.

(Particle diameter of the fine particles)

For further improving the stability in water of the fine particles which the polymer (A) used in the present invention

forms, the particle diameter of the fine particles is of from 5 to 1,000 nm, more preferably from 7 to 700 nm, most preferably from 10 to 500 nm. Further, there is a tendency that the dispersion stability is excellent when the particle size distribution of the fine particles is narrow, but, even when the particle size distribution of the fine particles is broad, a pigment dispersion having more excellent dispersion stability than a conventional pigment dispersion can be obtained. The particle diameter and particle size distribution were measured using a dynamic light-scattering particle diameter distribution measurement apparatus (dynamic light-scattering particle diameter measurement apparatus "Microtrac particle size distribution analyzer UPA-ST150", manufactured by Nikkiso Co., Ltd.) in the same manner as in the above-mentioned measurement method for fine particles.

(Neutralization rate of polymer (A))

A neutralization rate of the polymer (A) used in the present invention was determined from the following equation.

[Math. 2]

$$\text{Neutralization rate (\%)} = ((\text{Mass of the basic compound (g)} \times 56 \times 1{,}000)/(\text{Acid value of the polymer (A) (mg KOH/g)} \times \text{Equivalent of the basic compound} \times \text{Mass of the polymer (A) (g)})) \times 100$$

An acid value of the polymer (A) was measured in accordance with JIS test method K 0070-1992. Specifically, 0.5 g of a sample was dissolved in a THF solvent, and the resultant solution was subjected to titration with a 0.1 M alcohol solution of potassium hydroxide using phenolphthalein as an indicator to determine an acid value.

(Number average molecular weight of polymer (A))

The number average molecular weight of the polymer (A) used in the present invention is 1, 000 to 6, 000. As mentioned above, the polymer (A) has a solubility in water as low as 0.1 g/100 ml or less. Therefore, in the case where the polymer (A) has too high a molecular weight, when the polymer in the state of being neutralized by a basic compound is dispersed in water, the polymer may be deposited. Further, the polymer (A) is likely to be weak in the penetrating property into a pigment aggregate to cause the property for breaking the pigment aggregate to be poor, thereby making it difficult to easily disperse the pigment in water.

On the other hand, when the polymer having a number average molecular weight of less than 1,000 is used, the resultant aqueous pigment dispersion is likely to be poor in the dispersion stability.

Further, the polyhalogenated metallophthalocyanine pigment or diketopyrrolopyrrole pigment is a pigment which is unlikely to be dispersed, as compared to general pigments used in inks for basic colors (cyan, magenta, yellow, and black). For this reason, when a polymer having a number average molecular weight outside of the range of from 1,000 to 6, 000 and the above-mentioned specific pigment are used in combination, it is likely that an aqueous pigment dispersion or ink having coarse particles reduced to a level comparable to that of the pigment dispersion for basic colors to achieve excellent discharge stability and pigment dispersion stability cannot be obtained.

Therefore, with respect to the polymer (A) used in the present invention, the polymer having a smaller number average molecular weight within the above-mentioned range is preferably used, and the polymer having a number average molecular weight of 1,300 to 5, 000 is more preferably used. When the polymer having a number average molecular weight of 1,500 to 4,500 and the polyhalogenated metallophthalocyanine pigment or diketopyrrolopyrrole pigment are used in combination, the polyhalogenated metallophthalocyanine pigment or diketopyrrolopyrrole pigment is unlikely to settle and it is possible to reduce coarse particles to a level comparable to that of the pigment dispersion for basic colors, so that very excellent pigment dispersibility and discharge stability can be imparted to the textile printing agent.

The number average molecular weight is a value converted from a number average molecular weight of polystyrene as measured by GPC (gel permeation chromatography), specifically, a value as measured under the conditions shown below.

(Method for measuring a number average molecular weight (Mn))

The measurement was performed by a gel permeation chromatography (GPC) method under the conditions shown below.

Measurement apparatus: High-speed GPC apparatus ("HLC-8220GPC", manufactured by Tosoh Corp.)
Columns: The columns shown below, manufactured by Tosoh Corp., which are connected in series were used.

"TSKgel G5000" (7.8 mm I.D. × 30 cm) × 1
"TSKgel G4000" (7.8 mm I.D. × 30 cm) × 1
"TSKgel G3000" (7.8 mm I.D. × 30 cm) × 1
"TSKgel G2000" (7.8 mm I.D. × 30 cm) × 1

Detector: RI (differential refractometer)
Column temperature: 40°C
Eluent: Tetrahydrofuran (THF)
Flow rate: 1.0 mL/minute
Sample amount per injection: 100 μL (THF solution having a sample concentration of 0.4% by mass)
Standard sample: A calibration curve was prepared using the standard polystyrenes shown below.

(Standard polystyrenes)

"TSKgel standard polystyrene A-500", manufactured by Tosoh Corp.
"TSKgel standard polystyrene A-1000", manufactured by Tosoh Corp.
"TSKgel standard polystyrene A-2500", manufactured by Tosoh Corp.
"TSKgel standard polystyrene A-5000", manufactured by Tosoh Corp.
"TSKgel standard polystyrene F-1", manufactured by Tosoh Corp.
"TSKgel standard polystyrene F-2", manufactured by Tosoh Corp.
"TSKgel standard polystyrene F-4", manufactured by Tosoh Corp.
"TSKgel standard polystyrene F-10", manufactured by Tosoh Corp.
"TSKgel standard polystyrene F-20", manufactured by Tosoh Corp.
"TSKgel standard polystyrene F-40", manufactured by Tosoh Corp.
"TSKgel standard polystyrene F-80", manufactured by Tosoh Corp.
"TSKgel standard polystyrene F-128", manufactured by Tosoh Corp.
"TSKgel standard polystyrene F-288", manufactured by Tosoh Corp.
"TSKgel standard polystyrene F-550", manufactured by Tosoh Corp.

(Surface tension)

An aqueous resin dispersion containing the polymer (A) used in the present invention has a surface tension of 70 dyn/cm, and may exhibit a value close to a surface tension of water. When the surface tension of the polymer (A) is higher, it is expected that the surface tension of the obtained pigment dispersion is maintained at a predetermined value or more.

On the other hand, when using, instead of the polymer (A), a polymer which is such dissolved in water that the polymer does not form the above-mentioned fine particles when the neutralization rate of the anionic group by a basic compound is 100%, the surface tension of the aqueous polymer solution tends to be very low.

The surface tension of the polymer (A) using the polymer (A) is preferably 30 dyn/cm or more, more preferably 40 dyn/cm or more. The surface tension is a value as measured with respect to the 100% neutralized polymer solution obtained by adding 1 g of the polymer (A) and then adding a 0.1 mol/L aqueous solution of potassium hydroxide in such an amount that the determined acid value of the polymer is 100% neutralized.

As mentioned above, the polymer (A) is a polymer which is insoluble or unlikely soluble in water as a main medium for the pigment dispersion in the state of being non-neutralized, and which forms fine particles in the state of being 100% neutralized, and is not particularly limited as long as it is a polymer having an anionic group which is a hydrophilic group as well as a hydrophobic group per molecule.

As an example of the polymer (A), there can be mentioned a block polymer having a polymer block having a hydrophobic group and a polymer block having an anionic group. When the polymer (A) is a block polymer which has

a solubility in water of more than 0.1 g/100 ml, or which does not form fine particles when the neutralization rate of the anionic group by a basic compound is 100%, the effects of the present invention cannot be obtained.

With respect to the number of the hydrophobic groups and the number of the anionic groups, when the number of the anionic groups is too large, it is highly likely that the solubility of the polymer in water is more than 0.1 g/100 ml, or the polymer does not form fine particles when the neutralization rate of the anionic group by a basic compound is 100%. From this point of view, it is preferred that the number of the anionic groups is not too large. With respect to the polymer, the number of the anionic groups and the solubility in water are not always specified by the acid value or the number of the anionic groups at the time of designing the polymer. For example, with respect to the polymers having the same acid value, one having a lower molecular weight tends to be increased in the solubility in water, and one having a higher molecular weight tends to be reduced in the solubility in water. From this, in the present invention, the polymer (A) is specified by the solubility in water.

The polymer (A) may be a homopolymer, but is preferably a copolymer, and may be any of a random polymer, a block polymer, and an alternating polymer, and is especially preferably a block polymer. Further, the polymer may be a branched polymer, but is preferably a linear polymer.

Further, in view of the degree of freedom of the design, the polymer (A) is preferably a vinyl polymer. With respect to the method for producing a vinyl polymer having a molecular weight and solubility properties desired in the present invention, a vinyl polymer is preferably produced using "living polymerization", such as living radical polymerization, living cationic polymerization, or living anionic polymerization.

Especially, the polymer (A) is preferably a vinyl polymer produced using a (meth) acrylate monomer as one of raw materials, and, as a method for producing such a vinyl polymer, living radical polymerization and living anionic polymerization are preferred, and, from the viewpoint of achieving more precise design of the molecular weight and each segment of the block polymer, living anionic polymerization is further preferred.

(The polymer (A) produced by living anionic polymerization)

The polymer (A) produced by living anionic polymerization is specifically a polymer represented by the following general formula (1).

[Chem. 2]

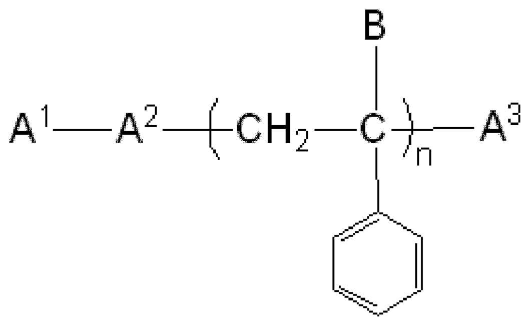

(1)

In the formula (1), $A^1$ represents an organolithium initiator residue, $A^2$ represents a polymer block of a monomer having an aromatic ring or a heterocycle, $A^3$ represents a polymer block having an anionic group, n represents an integer of 1 to 5, and B represents an aromatic group or an alkyl group.

In the general formula (1), $A^1$ represents an organolithium initiator residue. Specific examples of organolithium initiators include alkyllithiums, such as methyllithium, ethyllithium, propyllithium, butyllithium (e.g., n-butyllithium, sec-butyllithium, iso-butyllithium, and tert-butyllithium), pentyllithium, hexyllithium, methoxymethyllithium, and ethoxymethyllithium; phenylalkylenelithiums, such as benzyllithium, $\alpha$-methylstyryllithium, 1,1-diphenyl-3-methylpentyllithium, 1,1-diphenylhexyllithium, and phenylethyllithium; alkenyllithiums, such as vinyllithium, allyllithium, propenyllithium, and butenyllithium; alkynyllithiums, such as ethynyllithium, butynyllithium, pentynyllithium, and hexynyllithium; aryllithiums, such as phenyllithium and naphthyllithium; heterocyclic lithiums, such as 2-thienyllithium, 4-pyridyllithium, and 2-quinolyllithium; and alkyllithium-magnesium complexes, such as tri(n-butyl)magnesium-lithium and trimethylmagnesium-lithium.

Examples of monomers having an aromatic ring include styrene monomers, such as styrene, p-tert-butyldimethylsiloxystyrene, o-methylstyrene, p-methylstyrene, p-tert-butylstyrene, p-tert-butoxystyrene, m-tert-butoxystyrene, p-tert-(1-ethoxymethyl)styrene, m-chlorostyrene, p-chlorostyrene, p-fluorostyrene, $\alpha$-methylstyrene, and p-methyl-$\alpha$-methylstyrene; and vinylnaphthalene and vinylanthracene.

Examples of monomers having a heterocycle include vinylpyridine monomers, such as 2-vinylpyridine and 4-vinylpyridine.

These monomers can be used individually or in combination.

The polymer (A) of the general formula (1) where the number of repeating units derived from the monomer having an aromatic ring or a heterocycle and constituting $A^2$ is from 5 to 40 is preferably used, and the polymer (A) of the general formula (1) where the number of the above-mentioned repeating units is from 6 to 30 is more preferably used. It is especially preferred that the polymer (A) of the general formula (1) where the number of the above-mentioned repeating units is from 7 to 25 and the polyhalogenated metallophthalocyanine pigment or diketopyrrolopyrrole pigment are used in combination because the pigment is unlikely to settle and it is possible to reduce coarse particles to a level comparable to that of the pigment dispersion for basic colors, so that generation of a white streak in the printed image or deterioration of the definition of the printed image can be prevented, thereby making it possible to impart very excellent pigment dispersibility and discharge stability to the textile printing agent.

Further, in the polymer (A), the number of anionic groups present in the polymer block having an anionic group indicated by A3 in the general formula (1) above is preferably from 3 to 20, more preferably from 4 to 17, most preferably from 5 to 15. By using the polymer (A) having the number of anionic groups in the above-mentioned range and the polyhalogenated metallophthalocyanine pigment or diketopyrrolopyrrole pigment in combination, the pigment is unlikely to settle and it is possible to reduce coarse particles to a level comparable to that of the pigment dispersion for basic colors, so that generation of a white streak in the printed image or deterioration of the definition of the printed image can be prevented, thereby making it possible to impart very excellent pigment dispersibility and discharge stability to the textile printing agent.

In the general formula (1) above, $A^3$ represents a polymer block having an anionic group. $A^3$ is aimed at giving appropriate solubility as mentioned above, and further aimed at imparting dispersion stability in water to a pigment dispersion.

Examples of anionic groups in the polymer block $A^3$ include a carboxyl group, a sulfonic acid group, and a phosphoric acid group. Of these, a carboxyl group is preferred in view of the preparation and a variety of the types of and easy availability of monomers. The anionic group may be in the form of an acid anhydride group formed from two carboxyl groups which have dehydration condensed in the molecule or between the molecules .

With respect to the method for introducing an anionic group for the $A^3$, there is no particular limitation. For example, when the anionic group is a carboxyl group, the polymer block $A^3$ may be a polymer block (PB1) of a homopolymer or a copolymer obtained by homopolymerizing (meth)acrylic acid or copolymerizing (meth) acrylic acid with the other monomer, and may be a polymer block (PB2) of a homopolymer or a copolymer obtained by homopolymerizing a (meth)acrylate having a protecting group capable of reproducing an anionic group by deblocking or copolymerizing the (meth) acrylate with the other monomer, wherein an anionic group is reproduced from part of or all of the protecting group capable of reproducing an anionic group.

The term "(meth) acrylic acid" used for the polymer block $A^3$ correctively refers to acrylic acid and methacrylic acid, and the term "(meth)acrylate" correctively refers to an acrylate and a methacrylate.

Specific examples of (meth)acrylic acid and (meth)acrylates include (meth)acrylic acid, methyl (meth)acrylate, ethyl (meth)acrylate, iso-propyl (meth)acrylate, allyl (meth)acrylate, n-butyl (meth)acrylate, iso-butyl (meth)acrylate, sec-butyl (meth)acrylate, tert-butyl (meth)acrylate, n-amyl (meth)acrylate, iso-amyl (meth)acrylate, n-hexyl (meth)acrylate, n-octyl (meth)acrylate, 2-ethylhexyl (meth)acrylate, n-lauryl (meth)acrylate, n-tridecyl (meth)acrylate, n-stearyl (meth) acrylate, phenyl (meth) acrylate, benzyl (meth) acrylate, cyclohexyl (meth)acrylate, 4-tert-butylcyclohexyl (meth)acrylate, isobornyl (meth)acrylate, tricyclodecanyl (meth)acrylate, dicyclopentadienyl (meth)acrylate, adamantyl (meth)acrylate, glycidyl (meth)acrylate, tetrahydrofurfuryl (meth)acrylate, 2-methoxyethyl (meth)acrylate, 2-ethoxyethyl (meth)acrylate, dimethylaminoethyl (meth)acrylate, diethylaminoethyl (meth)acrylate, trifluoroethyl (meth)acrylate, tetrafluoropropyl (meth)acrylate, pentafluoropropyl (meth)acrylate, octafluoropentyl (meth)acrylate, pentadecafluorooctyl (meth)acrylate, heptadecafluorodecyl (meth)acrylate, N,N-dimethyl(meth)acrylamide, (meth)acryloylmorpholine, (meth)acrylonitrile, and polyalkylene oxide group-containing (meth)acrylates, such as polyethylene glycol (meth)acrylate, polypropylene glycol (meth)acrylate, polyethylene glycol-polypropylene glycol (meth)acrylate, polyethylene glycol-polybutylene glycol (meth)acrylate, polypropylene glycol-polybutylene glycol (meth)acrylate, methoxypolyethylene glycol (meth)acrylate, ethoxypolyethylene glycol (meth)acrylate, butoxypolyethylene glycol (meth)acrylate, octoxypolyethylene glycol (meth)acrylate, lauroxypolyethylene glycol (meth)acrylate, stearoxypolyethylene glycol (meth)acrylate, phenoxypolyethylene glycol (meth)acrylate, methoxypolypropylene glycol (meth)acrylate, and octoxypolyethylene glycol-polypropylene glycol (meth)acrylate. These monomers can be used individually or in combination.

In the living anionic polymerization method, when the monomer used is a monomer having a group having an active proton, such as an anionic group, the active end of a living anionic polymer is immediately reacted with the group having an active proton to be deactivated, and therefore a polymer cannot be obtained. In the living anionic polymerization, it is difficult to polymerize a monomer having a group having an active proton as such, and therefore it is preferred that the monomer is subjected to polymerization in a state such that the group having an active proton is protected, and then the group is deblocked for the protecting group to reproduce a group having an active proton.

For the above reason, in the polymer block $A^3$, a monomer containing a (meth) acrylate having a protecting group capable of reproducing an anionic group by deblocking is preferably used. By using such a monomer, the above-mentioned inhibition of polymerization can be prevented during the polymerization. Further, the anionic group protected by a protecting group can be reproduced to an anionic group by deblocking after obtaining the block polymer.

With respect to the method for introducing an anionic group for the $A^3$, there is no particular limitation. For example, when the anionic group is a carboxyl group, a carboxyl group is esterified, and deblocked by hydrolysis or the like as an after-treatment step, so that a carboxyl group can be reproduced. In this case, the protecting group capable of changing into a carboxyl group is preferably a group having an ester linkage, and examples of such groups include primary alkoxycarbonyl groups, such as a methoxycarbonyl group, an ethoxycarbonyl group, a n-propoxycarbonyl group, and a n-butoxycarbonyl group; secondary alkoxycarbonyl groups, such as an isopropoxycarbonyl group and a sec-butoxycarbonyl group; tertiary alkoxycarbonyl groups, such as a t-butoxycarbonyl group; phenylalkoxycarbonyl groups, such as a benzyloxycarbonyl group; and alkoxyalkylcarbonyl groups, such as an ethoxyethylcarbonyl group.

Examples of monomers usable when the anionic group is a carboxyl group include alkyl (meth) acrylates, such as methyl (meth)acrylate, ethyl (meth)acrylate, n-propyl (meth)acrylate, isopropyl (meth)acrylate, n-butyl (meth)acrylate, sec-butyl (meth)acrylate, isobutyl (meth)acrylate, t-butyl (meth)acrylate, 2-ethylhexyl (meth) acrylate, decyl (meth) acrylate, undecyl (meth) acrylate, dodecyl (meth)acrylate (lauryl (meth)acrylate), tridecyl (meth)acrylate, pentadecyl (meth)acrylate, hexadecyl (meth)acrylate, heptadecyl (meth)acrylate, octadecyl (meth)acrylate (stearyl (meth)acrylate), nonadecyl (meth)acrylate, and icosanyl (meth)acrylate; phenylalkylene (meth)acrylates, such as benzyl (meth)acrylate; and alkoxyalkyl (meth)acrylates, such as ethoxyethyl (meth)acrylate. These (meth)acrylates can be used individually or in combination. Of these (meth)acrylates, t-butyl (meth)acrylate and benzyl (meth)acrylate are preferably used in view of facilitating the changing reaction into a carboxyl group. Further, taking into consideration easy commercial availability, t-butyl (meth)acrylate is more preferred.

In the general formula (1), B represents an aromatic group or an alkyl group having 1 to 10 carbon atoms. Further, n represents an integer of 1 to 5.

In the living anionic polymerization method, when an attempt is made to directly polymerize a (meth) acrylate monomer with an active end of a styrene polymer which is highly nucleophilic, the (meth)acrylate monomer may be unable to be polymerized due to a nucleophilic attack on carbonyl carbon. For this reason, when a (meth) acrylate monomer is polymerized with the $A^1$-$A^2$, the nucleophilicity is controlled using a reaction controlling agent and then a (meth)acrylate monomer is polymerized. B in the general formula (1) is a group derived from the reaction controlling agent. Specific examples of reaction controlling agents include diphenylethylene, $\alpha$-methylstyrene, and p-methyl-$\alpha$-methylstyrene.

(Living anionic polymerization using a microreactor)

The living anionic polymerization method can be conducted in a batchwise manner as used in conventional free radical polymerization by controlling the reaction conditions, and further there can be mentioned a method in which polymerization is continuously conducted using a microreactor. The microreactor has excellent mixing property for a polymerization initiator and a monomer, and therefore reactions in the microreactor are caused simultaneously, and the temperature in the microreactor is uniform such that a consistent polymerization rate can be achieved, thereby making it possible to produce a polymer having a narrow molecular weight distribution. Furthermore, the stable propagation end facilitates production of a block copolymer in which components for the both blocks are not mixed with each other. In addition, the controlling properties for the reaction temperature are excellent, so that a side reaction can be easily suppressed.

A general method for living anionic polymerization using a microreactor is described with reference to Fig. 1 which is a diagrammatic view of a microreactor.

A first monomer and a polymerization initiator for initiating polymerization are introduced from tube reactors P1 and P2 (7 and 8 in Fig. 1), respectively, into a T-shaped micromixer M1 (1 in Fig. 1) having a flow path capable of mixing together a plurality of liquids, and the first monomer is subjected to living anionic polymerization in the T-shaped micromixer M1 to form a first polymer (step 1).

Then, the obtained first polymer is transferred to a T-shaped micromixer M2 (2 in Fig. 1), and, in the mixer M2, the propagation end of the obtained polymer is trapped by a reaction controlling agent introduced from a tube reactor P3 (9 in Fig. 1) to control the reaction (step 2).

In this instance, the number of n in the general formula (1) above can be controlled by appropriately selecting the type or amount of the reaction controlling agent.

Then, the first polymer which has been reaction-controlled in the T-shaped micromixer M2 is transferred to a T-shaped micromixer M3 (3 in Fig. 1), and, in the mixer M3, a second monomer introduced from a tube reactor P4 and the reaction-controlled first polymer are subjected to continuous living anionic polymerization (step 3).

Then, the reaction is quenched by a compound having an active proton, such as methanol, thereby producing

a block copolymer.

When the polymer (A) represented by the general formula (1) in the present invention is produced using the above-mentioned microreactor, a monomer having an aromatic ring or a heterocycle is used as the first monomer, and subjected to reaction using an organolithium initiator as the initiator to obtain the polymer block $A^2$ of the monomer having an aromatic ring or a heterocycle (wherein an organic group which is the organolithium initiator residue $A^1$ is bonded to one end of the polymer block $A^2$).

Then, the reactivity of the propagation end is controlled using a reaction controlling agent, and then a monomer containing a (meth)acrylate having the protecting group capable of reproducing an anionic group is reacted as the second monomer to obtain a polymer block.

Then, an anionic group is reproduced by a deblocking reaction, such as hydrolysis, so that the $A^3$, i.e., a polymer block having an anionic group is obtained.

A method for reproducing an anionic group by a deblocking reaction, such as hydrolysis, from an ester linkage of the protecting group capable of reproducing an anionic group is described below in detail.

A hydrolysis reaction of an ester linkage proceeds either under acidic conditions or under basic conditions, but the conditions for hydrolysis slightly vary depending on the group having an ester linkage. For example, when the group having an ester linkage is a primary alkoxycarbonyl group, such as a methoxycarbonyl group, or a secondary alkoxycarbonyl group, such as an isopropoxycarbonyl group, hydrolysis for the group is conducted under basic conditions to obtain a carboxyl group. Examples of basic compounds used for forming basic conditions in this case include metal hydroxides, such as sodium hydroxide and potassium hydroxide.

When the group having an ester linkage is a tertiary alkoxycarbonyl group, such as a t-butoxycarbonyl group, hydrolysis for the group is conducted under acidic conditions to obtain a carboxyl group. Examples of acid compounds used for forming acidic conditions in this case include mineral acids, such as hydrochloric acid, sulfuric acid, and phosphoric acid; Bronsted acids, such as trifluoroacetic acid; and Lewis acids, such as trimethylsilyl triflate. The reaction conditions for hydrolysis of a t-butoxycarbonyl group under acidic conditions are disclosed in, for example, "Synthesis of Organic Compounds (Yuukikagoubutsu no Gousei) IV, Lecture on Experimental Chemistry (Jikken Kagaku Kouza) 16, Fifth edition, edited by The Chemical Society of Japan".

Further, as a method for changing a t-butoxycarbonyl group to a carboxyl group, there can be mentioned a method using a cation exchange resin instead of the above-mentioned acid. Examples of the cation exchange resins include resins having, in a side chain of the polymer chains, an acid group, such as a carboxyl group (-COOH) or a sulfonic acid group ($-SO_3H$). Of these, preferred is a cation exchange resin which has a sulfonic acid group in a side chain of the resin and which is strongly acidic because it can cause the reaction to rapidly proceed. Examples of commercially available cation exchange resins usable in the present invention include strongly acidic cation exchange resin "Amberlite", manufactured by Organo Corporation. In view of achieving effective hydrolysis, the amount of the cation exchange resin used is preferably from 5 to 200 parts by mass, more preferably from 10 to 100 parts by mass, relative to 100 parts by mass of the polymer represented by the general formula (1) above.

When the group having an ester linkage is a phenylalkoxycarbonyl group, such as a benzyloxycarbonyl group, the group can be changed to a carboxyl group by subjecting it to hydrogenation reduction reaction. In this case, with respect to the reaction conditions, the reaction is conducted at room temperature in the presence of a palladium catalyst, such as palladium acetate, using hydrogen gas as a reducing agent, so that a carboxyl group can be quantitatively reproduced from a phenylalkoxycarbonyl group.

As mentioned above, the reaction conditions for changing to a carboxyl group vary depending on the type of the group having an ester linkage. For example, a polymer obtained by copolymerization using t-butyl (meth)acrylate and n-butyl (meth)acrylate as raw materials for $A^3$ has both a t-butoxycarbonyl group and a n-butoxycarbonyl group. A n-butoxycarbonyl group does not undergo hydrolysis under acidic conditions in which a t-butoxycarbonyl group suffers hydrolysis, and therefore only a t-butoxycarbonyl group can be selectively hydrolyzed and deblocked to be changed to a carboxyl group. Accordingly, the acid value of the hydrophilic block ($A^3$) can be controlled by appropriately selecting a monomer containing a (meth)acrylate having a protecting group capable of reproducing an anionic group, which is a raw material monomer for $A^3$.

In the polymer (A) represented by the general formula (1) above, the polymer block ($A^2$) and the polymer block ($A^3$) are advantageously definitely separated from each other in view of the stability of the obtained aqueous pigment dispersion. The polymer block ($A^2$)-to-polymer block ($A^3$) molar ratio $A^2$:$A^3$ is preferably from 100:10 to 100:500. When the ratio of $A^3$ to $A^2$ (100) is less than 10, the dispersion stability of the pigment or the discharge stability upon ink-jet discharging is likely to be poor. On the other hand, when the ratio of $A^3$ to $A^2$ (100) is more than 500, the polymer bocomes such high hydrophilic that it is very likely to penetrate into a recording medium which is paper or the like, so that the color development properties become poor. Especially, it is preferred that the ratio $A^2$:$A^3$ = 100:10 to 100:450.

In the polymer (A) represented by the general formula (1) above, the number of the monomers having an aromatic ring or a heterocycle and constituting the polymer block ($A^2$) is preferably from 5 to 40, more preferably from 6 to 30, most preferably from 7 to 25. Further, the number of the anionic groups constituting the polymer block ($A^3$) is

preferably from 3 to 20, more preferably from 4 to 17, most preferably from 5 to 15.

When the molar ratio $A^2$:$A^3$ of the polymer block ($A^2$) and the polymer block ($A^3$) is expressed by the molar ratio of the mole of the monomers having an aromatic ring or a heterocycle and constituting the polymer block ($A^2$) and the mole of the anionic groups constituting the ($A^3$), the molar ratio $A^2$:$A^3$ is preferably 100:7.5 to 100:400.

The polymer (A) represented by the general formula (1) above preferably has an acid value of 40 to 400 mg KOH/g, more preferably 40 to 300 mg KOH/g, most preferably 40 to 190 mg KOH/g. When the acid value of the polymer (A) is less than 40 mg KOH/g, there is a possibility that the dispersion stability of the pigment or the discharge stability upon ink-jet discharging is unsatisfactory. On the other hand, when the acid value of the polymer (A) is more than 400 mg KOH/g, the polymer becomes such high hydrophilic that it is very likely to penetrate into a recording medium, so that the color development properties become poor. Further, when the acid value of the polymer (A) is more than 190 mg KOH/g, there is a possibility that the water resistance of the resultant ink is adversely affected.

An acid value of the polymer (A) was measured by the same method as the above-mentioned method for measuring an acid value of fine particles of the polymer (A).

(Basic compound (neutralizing agent))

In the aqueous pigment dispersion in the present invention, it is preferred that the anionic group of the polymer (A) is neutralized.

With respect to the basic compound used for neutralizing the anionic group of the polymer (A), there can be used those which are known and commonly used, and, for example, inorganic basic substances, e.g., alkali metal hydroxides, such as sodium hydroxide and potassium hydroxide, ammonia, and organic basic compounds, such as triethylamine and alkanolamine, can be used.

With respect to the neutralization rate of the anionic group of the polymer (A) present in the aqueous pigment dispersion by a basic compound, the anionic group of the polymer (A) is not necessarily 100% neutralized. Specifically, it is preferred that 20 to 200% of the anionic group of the polymer (A) is neutralized, and it is more preferred that 80 to 150% of the anionic group is neutralized.

(Water)

With respect to the water used in the present invention, pure water, such as ion-exchanged water, ultrafiltered water, reverse-osmosed water, or distilled water, or ultrapure water can be used. Water sterilized by irradiation with an ultraviolet light or adding hydrogen peroxide is preferably used because when the ink composition is stored for a long time, it is possible to prevent the generation of fungi or bacteria.

The above-mentioned water functions as a solvent for the pigment or binder resin in the textile printing agent. In the case of an aqueous textile printing agent, generally, water constitutes most of the solvent and a water-soluble solvent is added as a part of the solvent. For example, water is generally used so that the water:water-soluble solvent ratio is in the range of from 4:1 to 1:1.

(Organic solvent)

With respect to the organic solvent in the present invention, any organic solvents which are conventionally used in a screen recording ink or aqueous ink-jet recording ink for printing can be used. The organic solvent is roughly classified into one which functions as a humectant and one which functions as a penetrating solvent.

Examples of organic solvents usable as the humectant include glycerol, an ethylene glycol addition product of glycerol (specific examples: Liponic EG-1 (manufactured by Lipo Chemicals Inc.) and the like), diglycerol, polyglycerol, ethylene glycol, propylene glycol, 1,3-propanediol, diethylene glycol, triethylene glycol, polyethylene glycol (specific examples: "#200", "#300", "#400", "#4000", "#6000", manufactured by Wako Pure Chemical Industries, Ltd.), 2-pyrrolidone, N-methyl-2-pyrrolidone, 1,3-dimethylimidazolinone, thiodiglycol, sulfolane, dimethyl sulfoxide, neopentyl alcohol, trimethylolpropane, and 2,2-dimethylpropanol. These organic solvents can be used individually or in combination.

Examples of organic solvents usable as the penetrating solvent include monohydric or polyhydric alcohols; amides; ketones; ketoalcohols; cyclic ethers; glycols; lower alkyl ethers of a polyhydric alcohol; polyalkylene glycols; polyols, such as propylene glycol, dipropylene glycol, polypropylene glycol, 1,3-propanediol, 1,4-butanediol, 1,5-pentanediol, 1,6-hexanediol, 3-methyl-1,5-pentanediol, 1,2,6-hexanetriol, trimethylolpropane, and pentaerythritol; polyhydric alcohol alkyl ethers, such as diethylene glycol monobutyl ether, triethylene glycol monobutyl ether, tetraethylene glycol monomethyl ether, propylene glycol monomethyl ether, dipropylene glycol monomethyl ether, tripropylene glycol monomethyl ether, and propylene glycol monobutyl ether; polyhydric alcohol aryl ethers and polyhydric alcohol aralkyl ethers, such as ethylene glycol monophenyl ether and ethylene glycol monobenzyl ether; lactams, such as 2-pyrrolidone, N-methyl-2-pyrrolidone, and ε-caprolactam; and 1,3-dimethylimidazolidinoneacetone, ethyl acetate, N-methyl-2-pyrrolidone, m-butyrolactone, a polyoxyalkylene addition product of glycerol, methyl acetate, tetrahydrofuran, 1,4-dioxane, dioxolane, propylene glycol monomethyl ether acetate, dimethyl sulfoxide, diacetone alcohol, and dimethylformamide propylene glycol monomethyl ether. These organic solvents can be used individually or in combination.

(Binder resin)

The binder resin used in the present invention may be in any of the form of a dispersion in which the resin in a particulate form is present in a solvent, the form of a water-soluble resin which is completely dissolved in water, and the like.

With respect to the binder resin, for example, there can be used urethane resins; polyvinyl alcohols; polyvinylpyrrolidones; polyacrylic acid; acrylic copolymers, such as an acrylic acid-acrylonitrile copolymer, a potassium acrylate-acrylonitrile copolymer, a vinyl acetate-acrylate copolymer, and an acrylic acid-alkyl acrylate copolymer; styrene-acrylic acid resins, such as a styrene-acrylic acid copolymer, a styrene-methacrylic acid copolymer, a styrene-methacrylic acid-alkyl acrylate copolymer, a styrene-$\alpha$-methylstyrene-acrylic acid copolymer, and a styrene-$\alpha$-methylstyrene-acrylic acid-alkyl acrylate copolymer; styrene-maleic acid; styrene-maleic anhydride; a vinylnaphthalene-acrylic acid copolymer; a vinylnaphthalene-maleic acid copolymer; and vinyl acetate copolymers, such as a vinyl acetate-ethylene copolymer, a vinyl acetate-fatty acid vinylethylene copolymer, a vinyl acetate-maleate copolymer, a vinyl acetate-crotonic acid copolymer, and a vinyl acetate-acrylic acid copolymer, and salts thereof.

Of these, a urethane resin and/or an acrylic resin is preferably used as the binder resin from the viewpoint of easy availability and further improvement of the printed material in the fastness to washing and (dry and wet) fastness to rubbing.

With respect to the urethane resin, a urethane resin obtained by reacting at least one polyol selected from the group consisting of polyether polyol, polyester polyol, and polycarbonate polyol, a polyol having a hydrophilic group which is an anionic group, a cationic group, a polyoxyethylene group, or a polyoxyethylene-polyoxypropylene group, and a polyisocyanate is used. From the viewpoint of the fastness to rubbing, polyol is preferably selected from polyester polyol and polycarbonate polyol.

From the viewpoint of further improvement of the fastness to washing and (dry and wet) fastness to rubbing, the urethane resin having a weight average molecular weight of 5, 000 to 200, 000 is preferably used, and the urethane resin having a weight average molecular weight of 20,000 to 100,000 is more preferably used.

Examples of the polyether polyols include those obtained by subjecting to addition polymerization a compound having 2 or more active hydrogen groups, such as ethylene glycol, diethylene glycol, triethylene glycol, propylene glycol, trimethylene glycol, 1,3-butanediol, 1,4-butanediol, 1,6-hexanediol, neopentyl glycol, glycerol, trimethylolethane, trimethylolpropane, sorbitol, sucrose, aconitic saccharide, femimellitic acid, phosphoric acid, ethylenediamine, diethylenetriamine, triisopropanolamine, pyrrogallol, dihydroxybenzoic acid, hydroxyphthalic acid, or 1,2,3-propanetrithiol, and a cyclic ether compound, such as ethylene oxide, propylene oxide, butylene oxide, styrene oxide, epichlorohydrin, tetrahydrofuran, or cyclophenoxylene, and those obtained by subjecting the cyclic ether compound to ring-opening polymerization using a cationic catalyst, a protonic acid, a Lewis acid, or the like as a catalyst.

The polyester polyol is obtained by a dehydration condensation reaction of a diol compound, a dicarboxylic acid, a hydroxycarboxylic acid compound, or the like, by a ring-opening polymerization reaction of a cyclic ester compound, such as $\varepsilon$-caprolactone, or by copolymerizing a polyester obtained by the above reaction. Examples of diol compounds as a raw material for the polyester polyol include ethylene glycol, propylene glycol, 1,3-propanediol, 1,4-butanediol, 1,5-pentanediol, 3-methyl-1,5-pentanediol, 1,6-hexanediol, neopentyl glycol, diethylene glycol, triethylene glycol, tetraethylene glycol, polyethylene glycol, dipropylene glycol, tripropylene glycol, polypropylene glycol, bishydroxyethoxybenzene, 1,4-cyclohexanediol, 1,4-cyclohexanedimethanol, bisphenol A, hydrogenated bisphenol A, hydroquinone, and alkylene oxide addition products thereof.

Examples of dicarboxylic acids which can be used as a raw material for the polyester polyol include succinic acid, adipic acid, azelaic acid, sebacic acid, dodecanedicarboxylic acid, maleic acid, fumaric acid, 1,3-cyclopentanedicarboxylic acid, 1,4-cyclohexanedicarboxylic acid, terephthalic acid, isophthalic acid, phthalic acid, 1,4-naphthalenedicarboxylic acid, 2,5-naphthalenedicarboxylic acid, 2,6-naphthalenedicarboxylic acid, naphthalic acid, biphenyldicarboxylic acid, and 1,2-bis(phenoxy)ethane-p,p'-dicarboxylic acid.

Further, examples of hydroxycarboxylic acids which can be used as a raw material for the polyester polyol include p-hydroxybenzoic acid and p-(2-hydroxyethoxy)benzoic acid.

With respect to the polycarbonate polyol, one which is obtained by reacting, for example, a carbonate with a low molecular-weight polyol, preferably with a linear aliphatic diol can be used.

With respect to the carbonate, methyl carbonate, dimethyl carbonate, ethyl carbonate, diethyl carbonate, cyclocarbonate, diphenyl carbonate, or the like can be used.

With respect to the low molecular-weight polyol which is capable of reacting with a carbonate, for example, there can be used dihydroxy compounds having a relatively low molecular weight, such as ethylene glycol, diethylene

glycol, triethylene glycol, 1,2-propylene glycol, 1,3-propylene glycol, dipropylene glycol, 1,4-butanediol, 1,3-butanediol, 1,2-butanediol, 2,3-butanediol, 1,5-pentanediol, 1,5-hexanediol, 2,5-hexanediol, 1,6-hexanediol, 1,7-heptanediol, 1,8-octanediol, 1,9-nonanediol, 1,10-decanediol, 1,11-undecanediol, 1,12-dodecanediol, 1,4-cyclohexanediol, 1,4-cyclohexanedimethanol, hydroquinone, resorcin, bisphenol-A, bisphenol-F, and 4,4'-biphenol; polyether polyols, such as polyethylene glycol, polypropylene glycol, and polyoxytetramethylene glycol; and polyester polyols, such as polyhexamethylene adipate, polyhexamethylene succinate, and polycaprolactone.

The polycarbonate structure is preferably used in an amount of from 10 to 90% by mass, based on the total mass of the polyol and polyisocyanate used in the production of the polycarbonate urethane resin.

The urethane resin has a hydrophilic group for imparting the dispersion stability in the textile printing agent.

With respect to the hydrophilic group, those which are generally called an anionic group, a cationic group, or a nonionic group can be used, but, especially, an anionic group or a cationic group is preferably used.

With respect to the anionic group, for example, a carboxyl group, a carboxylate group, a sulfonic acid group, a sulfonate group, or the like can be used. Of these, a carboxylate group or a sulfonate group, part of or all of which is neutralized by a basic compound or the like, is preferably used for maintaining excellent water dispersibility.

Examples of basic compounds which can be used for neutralizing a carboxyl group or a sulfonic acid group as the anionic group include ammonia, organic amines, such as triethylamine, pyridine, and morpholine, alkanolamines, such as monoethanolamine, and metal base compounds containing Na, K, Li, Ca, or the like. Of these, organic amines having a boiling point of 100°C or lower are preferably selected in view of reducing the compound remaining in the dried film.

With respect to the cationic group, for example, a tertiary amino group or the like can be used. With respect to the acid which can be used for neutralizing part of or all of the tertiary amino group, for example, formic acid, acetic acid, or the like can be used. With respect to the quaternizing agent which can be used for quaternizing part of or all of the tertiary amino group, for example, dialkyl sulfates, such as dimethyl sulfate and diethyl sulfate, can be used.

With respect to the nonionic group, for example, polyoxyalkylene groups, such as a polyoxyethylene group, a polyoxypropylene group, a polyoxybutylene group, a poly(oxyethylene-oxypropylene) group, and a polyoxyethylene-polyoxypropylene group, can be used. Of these, a polyoxyalkylene group having oxyethylene units is preferably used for further improving the hydrophilicity.

The hydrophilic group is present in an amount of 100 to 1,200 mmol/kg for imparting further more excellent water dispersibility, more preferably from 150 to 1,000 mmol/kg, based on the whole of the urethane resin.

The hydrophilic group is present in an amount of 0.5 to 30% for imparting further more excellent water dispersibility, more preferably from 1 to 20%, based on the whole of the urethane resin.

Further, the textile printing agent of the present invention may use the below-mentioned crosslinking agent for the purpose of further improving the fastness to washing and fastness to rubbing. When the crosslinking agent is used, the urethane resin having a functional group which can undergo a crosslinking reaction with the functional group of the crosslinking agent is preferably used.

As examples of the functional groups, there can be mentioned a carboxyl group and a carboxylate group which are usable as the hydrophilic group. The carboxyl group and the like contribute to the water dispersion stability of the urethane resin in an aqueous medium, and, when they undergo a crosslinking reaction, they also act as the functional group and could cause a crosslinking reaction with part of the crosslinking agent.

When a carboxyl group or the like is used as the functional group, the urethane resin having an acid value of 2 to 55 is preferably used, and the urethane resin having an acid value of 15 to 50 is preferably used for improving the fastness to washing and fastness to rubbing. The acid value used in the present invention is a theoretical value determined by making a calculation based on the amount of the acid group-containing compound used, such as the carboxyl group-containing polyol used in the production of the urethane resin.

The urethane resin can be produced by reacting, for example, polyol and polyisocyanate, if necessary, with a chain extender.

With respect to the chain extender, a polyamine, the other active hydrogen atom-containing compounds, and the like can be used.

With respect to the polyamine, for example, there can be used diamines, such as ethylenediamine, 1,2-propanediamine, 1,6-hexamethylenediamine, piperazine, 2,5-dimethylpiperazine, isophoronediamine, 4,4'-dicyclohexylmethanediamine, 3,3'-dimethyl-4,4'-dicyclohexylmethanediamine, and 1,4-cyclohexanediamine; N-hydroxymethylaminoethylamine, N-hydroxyethylaminoethylamine, N-hydroxypropylaminopropylamine, N-ethylaminoethylamine, N-methylaminopropylamine; diethylenetriamine, dipropylenetriamine, triethylenetetramine; hydrazine, N,N'-dimethylhydrazine, 1,6-hexamethylenebishydrazine; succinic acid dihydrazide, adipic acid dihydrazide, glutaric acid dihydrazide, sebacic acid dihydrazide, isophthalic acid dihydrazide; and β-semicarbazidepropionic acid hydrazide, 3-semicarbazide-propyl carbazate, and semicarbazide-3-semicarbazidemethyl-3,5,5-trimethylcyclohe xane, and ethylenediamine is preferably used.

With respect to the other active hydrogen-containing compounds, for example, there can be used glycols, such

as ethylene glycol, diethylene glycol, triethylene glycol, propylene glycol, 1,3-propanediol, 1,3-butanediol, 1,4-butanediol, hexamethylene glycol, neopentyl glycol, sucrose, methylene glycol, glycerol, and sorbitol; phenols, such as bisphenol A, 4,4'-dihydroxydiphenyl, 4,4'-dihydroxydiphenyl ether, 4,4'-dihydroxydiphenyl sulfone, hydrogenated bisphenol A, and hydroquinone; and water and the like.

The chain extender is preferably used, for example, in an amount of 1.9 or less (equivalent ratio), in terms of the ratio of the equivalent of the amino group and active hydrogen atom-containing group of the chain extender to the equivalent of the isocyanate group of a urethane prepolymer obtained by reacting the polyol and polyisocyanate, more preferably in an amount of from 0.0 to 1.0 (equivalent ratio), more preferably in an amount of 0.5% by mass.

The chain extender can be used when reacting the polyol and polyisocyanate or after the reaction. Alternatively, the chain extender can be used when dispersing the above-obtained urethane resin in an aqueous medium to form an aqueous dispersion.

Further, examples of polyols other than those mentioned above include polyols having a relatively low molecular weight, such as ethylene glycol, propylene glycol, 1,3-propanediol, 1,4-butanediol, 1,5-pentanediol, 3-methyl-1,5-pentanediol, 1,6-hexanediol, neopentyl glycol, diethylene glycol, triethylene glycol, tetraethylene glycol, polyethylene glycol, dipropylene glycol, tripropylene glycol, bishydroxyethoxybenzene, 1,4-cyclohexanediol, 1,4-cyclohexanedimethanol, bisphenol A, hydrogenated bisphenol A, hydroquinone and alkylene oxide addition products thereof, glycerol, trimethylolethane, trimethylolpropane, sorbitol, and pentaerythritol. These polyols can be used individually or in combination.

With respect to the polyisocyanate which reacts with the polyol to form a urethane resin, for example, there can be mentioned aromatic diisocyanates, such as phenylene diisocyanate, tolylene diisocyanate, diphenylmethane diisocyanate, and naphthalene diisocyanate; and aliphatic or alicyclic structure-containing diisocyanates, such as hexamethylene diisocyanate, lysine diisocyanate, cyclohexane diisocyanate, isophorone diisocyanate, dicyclohexylmethane diisocyanate, xylylene diisocyanate, and tetramethylxylylene diisocyanate, and these can be used individually or in combination.

With respect to the acrylic resin, there is no particular limitation, and there can be mentioned a resin obtained by homopolymerizing or copolymerizing a (meth)acrylate, and a resin obtained by copolymerizing a vinyl monomer copolymerizable with a (meth)acrylate. In the present invention, the term " (meth) acrylic acid" means one of or both of methacrylic acid and acrylic acid, the term " (meth) acrylate" means one of or both of a methacrylate and an acrylate, and the term " (meth) acryloyl" means one of or both of methacryloyl and acryloyl.

Examples of (meth)acrylates and vinyl monomers copolymerizable with a (meth)acrylate include alkyl (meth)acrylates, such as methyl (meth)acrylate, ethyl (meth)acrylate, n-butyl (meth)acrylate, sec-butyl (meth)acrylate, t-butyl (meth)acrylate, isopropyl (meth)acrylate, and isobutyl (meth)acrylate; aromatic (meth)acrylates, such as benzyl (meth)acrylate; hydroxyl group-containing monomers, such as 2-hydroxyethyl (meth)acrylate and 2-hydroxypropyl (meth)acrylate; alkylpolyalkylene glycol mono(meth)acrylates, such as methoxypolyethylene glycol mono(meth)acrylate and methoxypolypropylene glycol mono(meth)acrylate; fluorine (meth) acrylates, such as perfluoroalkylethyl (meth) acrylate; aromatic vinyl compounds, such as styrene, styrene derivatives (e.g., p-dimethylsilylstyrene, (p-vinylphenyl)methyl sulfide, p-hexynylstyrene, p-methoxystyrene, p-tert-butyldimethylsiloxystyrene, o-methylstyrene, p-methylstyrene, p-tert-butylstyrene, and $\alpha$-methylstyrene), vinylnaphthalene, vinylanthracene, and 1,1-diphenylethylene; (meth)acrylate compounds, such as glycidyl (meth)acrylate, epoxy (meth)acrylate, ethylene glycol di(meth)acrylate, diethylene glycol di(meth)acrylate, trimethylolpropane tri(meth)acrylate, tetramethylene glycol tetra (meth)acrylate, 2-hydroxy-1,3-diacryloxypropane, 2,2-bis[4-(acryloxymethoxy)phenyl]propane, 2,2-bis[4-(acryloxyethoxy)phenyl]propane, dicyclopentenyl (meth)acrylate tricyclodecanyl (meth)acrylate, tris(acryloxyethyl) isocyanurate, and urethane (meth)acrylate; (meth)acrylates having an alkylamino group, such as dimethylaminoethyl (meth)acrylate, diethylaminoethyl (meth)acrylate, and dimethylaminopropyl (meth)acrylate; vinylpyridine compounds, such as 2-vinylpyridine, 4-vinylpyridine, and naphthylvinylpyridine; and conjugated dienes, such as 1,3-butadiene, 2-methyl-1,3-butadiene, 2,3-dimethyl-1,3-butadiene, 1,3-pentadiene, 1,3-hexadiene, and 1,3-cyclohexadiene. These monomers can be used individually or in combination.

The acrylic resin used in the present invention preferably has copolymerized with the above-mentioned general-purpose monomer as well as a monomer having a specific functional group because the resultant printed material is improved in texture or the like. Examples of such monomers having a functional group include monomers having a carboxyl group, monomers having an epoxy group, monomers having a hydrolyzable silyl group, and monomers having an amide group.

With respect to the monomer having a carboxyl group, for example, (meth)acrylic acid, itaconic acid, crotonic acid, fumaric acid, maleic anhydride, and citraconic acid can be used.

With respect to the monomer having an epoxy group, for example, glycidyl (meth) acrylate and glycidyl allyl ether can be used.

With respect to the monomer having a hydrolyzable silyl group, for example, vinylsilane compounds, such as vinylmethyldimethoxysilane, vinyltrimethoxysilane, vinyltriethoxysilane, and vinyltris(2-methoxyethoxy)silane; and (meth)acryloyloxyalkylsilane compounds, such as 3-(meth)acryloyloxypropyltrimethoxysilane, 3-(meth)acryloyloxypropylmethyldimethoxysilane, 3-(meth)acryloyloxypropyltriethoxysilane, and 3-(meth)acryloyloxypropylmethyldiethoxysilane, can be used. These monomers can be used individually or in combination.

With respect to the monomer having an amide group, acrylamide compounds, such as (meth)acrylamide, N,N-dimethylacrylamide, isopropylacrylamide, and diacetoneacrylamide, and the like can be used.

With respect to the form of resin particles of the acrylic resin dispersed in water, there is no particular limitation, and, for example, there can be mentioned an emulsion obtained by forcibly emulsifying the resin using an emulsifier, and a dispersion of the resin having a nonionic group or a neutralized ionic group. Particularly, preferred is a dispersion obtained by neutralizing by a basic compound an acrylic resin formed by copolymerizing a monomer having a carboxyl group, among the compounds which are a raw material for the polyacrylic resin. With respect to the basic compound used for neutralization, the basic compound mentioned above in connection with the polyurethane resin can be used. The acid value is also a value measured in the same manner as mentioned above.

The binder resin used in the present invention is aimed at fixing the pigment on fiber, but, when the amount of the binder resin incorporated is large, the feeling of the resultant fiber tends to be slightly hard, while the fastness to washing and the dry fastness to rubbing as well as the wet fastness to rubbing are improved. Therefore, the binder resin is preferably used in an amount of 20% by mass or less, more preferably 10% by mass or less, based on the total mass of the textile printing agent, and the lower limit of the amount is preferably 1% by mass or more, more preferably 3% by mass or more.

The ratio of the binder resin and the pigment may be the ratio of those which are generally used in a screen recording ink or an ink-jet recording ink, and, for example, the binder resin-to-pigment ratio is preferably from 1:3 to 8:1.

As mentioned above, the weight average molecular weight of the binder resin used contributes to the fastness to washing, dry fastness to rubbing, and wet fastness to rubbing, and, the larger the weight average molecular weight of the binder resin, the higher the fastness. In addition, the amount of the binder resin used also contributes to the fastness. Therefore, for obtaining higher fastness, the amount of the binder resin used is preferably larger, and, in the present invention, for example, when the ratio is 1:1 to 8:1, higher fastness is achieved. The use of the high molecular-weight binder resin in an excess amount leads to an increase of the viscosity, and therefore, when the textile printing agent is discharged or the like in an ink-jet system, it is preferred that the amount of the binder resin used is determined considering the balance of the fastness with the viscosity.

(Method for producing the textile printing agent)

The textile printing agent of the present invention can be produced by preparing a high-concentration water dispersion of the pigment (hereinafter, referred to as "aqueous pigment dispersion"), and further diluting the water dispersion with water, and adding the binder resin and, if necessary, other additives to the dispersion.

With respect to the aqueous pigment dispersion used in the present invention, it is preferred that, before being dispersed in water which is a solvent, the pigment is preliminarily dispersed in a mixture of the polymer (A) and an organic solvent, such as a water-soluble organic solvent. Specifically, the polymer (A), basic compound, and pigment are well mixed in the presence of an organic solvent using a stirrer or a dispersing apparatus to cause the pigment and polymer (A) to be self-water-dispersible, and then the resultant dispersion and water are mixed with each other to obtain an aqueous pigment dispersion.

In the present invention, with respect to the amounts of the individual raw materials incorporated, there is no particular limitation, but it is preferred that the raw materials are incorporated using as a yardstick the ratio for the amounts shown below.

For example, the polymer (A) is preferably incorporated in an amount of 5 to 200 parts by mass, more preferably 5 to 100 parts by mass, relative to 100 parts by mass of the pigment.

The water-soluble organic solvent is preferably incorporated in an amount of 20 to 200 parts by mass, more preferably 30 to 200 parts by mass, relative to 100 parts by mass of the pigment.

The basic compound is, as mentioned above, preferably used in such an amount that the neutralization rate of the polymer (A) becomes 20 to 200%, more preferably used in such an amount that the neutralization rate becomes 65 to 150%. As mentioned above, the neutralization rate in this case is determined by making a calculation from the equation shown below.

[Math. 3]

$$\text{Neutralization rate (\%)} = ((\text{Mass of the basic compound (g)} \times 56 \times 1{,}000)/(\text{Acid value of the polymer (A) (mg KOH/g)} \times \text{Equivalent of the basic compound} \times \text{Mass of the polymer (A) (g)})) \times 100$$

With respect to the basic compound, a 100% pure basic compound may be used, but possibly causes heat generation or the like, and therefore is preferably used in the form of an aqueous solution obtained by preliminarily dissolving the compound in water.

With respect to the organic solvent, a high boiling-point water-soluble organic solvent is preferably used because such a solvent needs no desolvation or the like, and a water-soluble organic solvent which does not adversely affect the properties of the textile printing agent prepared using the solvent is preferably used. With respect to such a water-soluble organic solvent, for example, the above-mentioned high boiling-point water-soluble organic solvent is preferably used.

In the step of obtaining a dispersion of the polymer (A), basic compound, water-soluble organic solvent, and pigment (hereinafter, referred to as "step (1)"), water in such a small amount that the effects of the present invention are not sacrificed may be used. However, when a large amount of water is present in the initial stage of dispersing the pigment, there is a possibility that the pigment dispersion efficiency of the polymer (A) is lowered or a lump of the polymer (A) alone is formed, and therefore the amount of water is preferably smaller.

With respect to the dispersing method in the step (1), there is no particular limitation and a known dispersing method may be used. Examples of dispersing methods include medium mill dispersing methods using a medium, such as a paint shaker, a bead mill, a sand mill, and a ball mill; medium-less dispersing methods using an ultrasonic homogenizer, a high-pressure homogenizer, a Nanomizer, or an Ultimizer; and kneading dispersing methods applying strong shear force, such as a roll mill, a Henschel mixer, an atmospheric pressure kneader, an intensive mixer, a Banbury mixer, and a planetary mixer. Of these, the kneading dispersing method is a method in which strong shear force is applied to a high solids-content mixture containing a pigment using a kneader to finely divide the pigment particles, and is such an advantageous method that an aqueous pigment dispersion having a high pigment concentration can be obtained and further coarse particles can be effectively reduced.

When the step (1) is performed by the kneading dispersing method, the polymer (A), basic compound, water-soluble organic solvent, and pigment are charged into a kneader and kneaded together. With respect to the order of charging the materials in this instance, there is no particular limitation, and all of the materials may be charged at the same time and started to be kneaded, and the materials may be individually charged portion by portion. For example, the order of charging the raw materials may be changed according to the type of the raw material, for example, the polymer (A), basic compound, and pigment are charged and then the water-soluble organic solvent is charged. The amounts of the respective raw materials charged can be in the above-mentioned respective ranges.

For applying to the mixture strong shear force which is the merit of the kneading dispersing method, it is preferred that the mixture is kneaded in a state such that the solids content of the mixture is high, and higher shear force can be applied to the mixture in such a case.

The preferred shear force applied to the pigment and polymer (A) in this step varies depending on the kneader used, but is, for example, 180 MPa or more, further preferably 1,800 MPa or more. The polymer (A) used in the present invention can maintain excellent dispersion even in the state of having applied thereto high shear force, thereby making it possible to obtain an aqueous pigment dispersion having coarse particles reduced.

For applying higher shear force, the solids content including the pigment and polymer (A) is preferably 40% by mass or more, more preferably 50% by mass or more. Further, for obtaining an aqueous pigment dispersion having an increased pigment concentration, the amount of the pigment in the mixture is preferably as large as possible. For example, the amount of the pigment is preferably 35% by mass or more, more preferably 40% by mass or more, based on the mass of the mixture.

Further, with respect to the ratio of the pigment and the polymer (A) contained, there is no particular limitation, but the ratio is generally from 10/0.5 to 10/20, more preferably 10/0.5 to 10/10, in terms of a mass ratio.

The water-soluble organic solvent is preferably used in an amount of 1/5 or more of the pigment, most preferably 1/3 or more of the pigment, in terms of a mass ratio.

The aqueous pigment dispersion used in the production of the textile printing agent of the present invention

can be produced through the step of mixing the dispersion obtained in the step 1 with water (hereinafter, referred to as "step (2)").

The dispersion may be added to water, but it is preferred that, conversely, water is added to the dispersion from the viewpoint of obtaining an aqueous pigment dispersion having a uniform particle diameter.

With respect to the method for mixing water with the dispersion, there is no particular limitation. However, when all water is added at a time and mixed with the dispersion, there is a possibility that a uniform aqueous pigment dispersion cannot be obtained. Therefore, it is preferred that water is added portion by portion and mixed with the dispersion. Further, generally, the dispersion is dispersed using a dispersing machine.

With respect to the dispersing machine used in the step 2, a known dispersing machine can be used, and examples of dispersing machines using a medium include a paint shaker, a ball mill, an attritor, a basket mill, a sand mill, a sand grinder, a Dyno-mill, a Dispermat, an SC mill, a spike mill, and an agitator mill. Further, examples of dispersing machines using no medium include an ultrasonic homogenizer, a Nanomizer, a dissolver, a disper, and a high-speed impeller dispersing machine. With respect to the dispersion obtained by the above dispersing method, if necessary, the concentration may be adjusted using the above-mentioned organic solvent.

According to the type of the dispersing machine used or the like, before dispersing the dispersion in water using the dispersing machine, if necessary, a water-soluble organic solvent is preferably further added to and mixed with the dispersion so that the dispersion is diluted and controlled in viscosity to be suitable for a treatment using the dispersing machine (hereinafter, the dispersion having the viscosity controlled is frequently referred to as "viscosity-controlled dispersion"). For example, when using a sand mill, it is preferred that the dispersion is diluted so that the solids content becomes 10 to 40% by mass and the viscosity is controlled to be several tens to several hundred centipoises, followed by driving the sand mill for dispersing.

Further, after dispersed in water in the step 2, the dispersion may be subjected to, if necessary, a centrifugal separation or filtration step.

In the present invention, in the step 2, phase inversion emulsification or a similar mechanism forms an aqueous pigment dispersion having water as a medium.

When the step (1) and step (2) in the present invention are performed in this order, an aqueous pigment dispersion having coarse particles reduced can be obtained.

In the thus obtained aqueous pigment dispersion, the pigment is presumed to be included in or partially adsorb on the polymer (A) to be stabilized.

Coarse particles cause the image properties to be poor, and therefore, after the textile printing agent is produced, it is preferred to remove coarse particles from the textile printing agent by a centrifugal separation or filtration treatment or the like.

After the dispersing step, an impurity removal step by an ion exchange treatment or an ultrafiltration treatment may be performed, followed by an after-treatment. Ionic substances, such as cations or anions, (e.g., bivalent metal ions) can be removed by an ion exchange treatment, and substances having impurities dissolved (such as residual substances in the synthesis of the pigment, excess components in the dispersion composition, a resin which does not adsorb on an organic pigment, and mixed foreign matter) can be removed by an ultrafiltration treatment. In the ion exchange treatment, a known ion-exchange resin is used. In the ultrafiltration treatment, a known ultrafiltration membrane is used, and it may be either of a general type or of a type of twofold increased ability.

The aqueous pigment dispersion is prepared, and then mixed with water, the binder resin, and, if necessary, an additive to obtain a textile printing agent which is suitable for a preferred treatment method, such as dip dyeing or printing, according to the fiber to be colored.

With respect to the textile printing agent for screen recording, the textile printing agent containing, as an additive, an antiseptic agent, a viscosity modifier, a pH adjustor, a chelating agent, an antioxidant, an ultraviolet light absorber, a flame retardant, a crosslinking agent, or the like can be used. The textile printing agent for screen recording preferably has a pigment concentration of from 1 to 10% by mass. In such a case, the additive is preferably added together with the binder resin.

With respect to the textile printing agent for dip dyeing, the textile printing agent containing, as an additive, an antiseptic agent, a viscosity modifier, a pH adjustor, a chelating agent, an antioxidant, an ultraviolet light absorber, a flame retardant, a crosslinking agent, or the like and the binder resin can be used. The textile printing agent for dip dyeing having a pigment concentration of from 1 to 10% by mass is preferably used. The viscosity of the textile printing agent for dip dyeing is arbitrarily set to be from 1 to 100 mPa•s according to the printing apparatus.

With respect to the textile printing agent for spray printing, the textile printing agent containing, as an additive, a viscosity modifier, a pH adjustor, a chelating agent, a plasticizer, an antioxidant, an ultraviolet light absorber, or the like and the binder resin can be used. The textile printing agent for spray recording having a pigment concentration of from 1 to 10% by mass is preferably used. The viscosity of the textile printing agent for spray recording is arbitrarily set to be in the range of from 1 to 100 mPa•s according to the apparatus.

With respect to the textile printing agent for ink-jet recording, the textile printing agent containing, as an additive,

an antiseptic agent, a viscosity modifier, a pH adjustor, a chelating agent, an antioxidant, an ultraviolet light absorber, a flame retardant, a crosslinking agent, or the like can be used. The textile printing agent for ink-jet recording preferably has a pigment concentration of 1 to 20% by mass for the necessity of obtaining a satisfactory image density and surely achieving excellent dispersion stability of the pigment in the textile printing agent. The additive is preferably added to the aqueous pigment dispersion, together with the binder resin.

Specific examples of antiseptic agents or mildewproofing agents include sodium benzoate, sodium pentachlorophenol, sodium 2-pyridinethiol-1-oxide, sodium sorbate, sodium dehydroacetate, and 1,2-dibenzothiazolin-3-one (Proxel GXL, Proxel XL-2, Proxel LV, Proxel AQ, Proxel BD20, and Proxel DL of Arch Chemicals, Inc.).

Specific examples of viscosity modifiers include natural or synthetic polymers which are mainly water-soluble, such as carboxymethyl cellulose, sodium polyacrylate, polyvinylpyrrolidone, gum arabic, and starch.

Specific examples of pH adjustors include collidine, imidazole, phosphoric acid, 3-(N-morpholino)propanesulfonic acid, tris(hydroxymethyl)aminomethane, and boric acid.

Specific examples of chelating agents include ethylenediaminetetraacetic acid, ethylenediaminediacetic acid, nitrilotriacetic acid, 1,3-propanediaminetetraacetic acid, diethylenetriaminepentaacetic acid, N-hydroxyethylethylenediaminetriacetic acid, iminodiacetic acid, uramildiacetic acid, 1,2-diaminocyclohexane-N,N,N',N'-tetraacetic acid, malonic acid, succinic acid, glutaric acid, maleic acid, and salts thereof (including hydrates thereof).

Specific examples of antioxidants or ultraviolet light absorbers include allophanates, such as allophanate and methyl allophanate; biurets, such as biuret, dimethylbiuret, and tetramethylbiuret; L-ascorbic acid and salts thereof; Tinuvin 328, 900, 1130, 384, 292, 123, 144, 622, 770, 292, Irgacor 252, 153, Irganox 1010, 1076, 1035, MD 1024, manufactured by CIBA-GEIGY, and oxides of lanthanide.

When the textile printing agent of the present invention is applied to an ink-jet recording method, the surface tension of the textile printing agent is preferably adjusted to 20 to 60 mN/m, more preferably 20 to 45 mN/m, further preferably 20 to 40 mN/m. When the surface tension of the textile printing agent is less than 20 mN/m, the liquid is likely to flow onto the nozzle surface, thereby making it impossible to perform normal printing. On the other hand, when the surface tension of the textile printing agent is more than 60 mN/m, it is likely that a non-absorbing substrate repels the textile printing agent. Further, the viscosity of the textile printing agent is preferably 1.2 to 20.0 mPa•s, more preferably 2.0 to less than 15.0 mPa•s, further preferably 3.0 to less than 12.0 mPa•s. When the viscosity of the textile printing agent is in this range, excellent discharge properties and maintaining excellent jetting properties for a long term can be achieved. The surface tension can be appropriately controlled by using the above-mentioned surfactant.

Further, with respect to the textile printing agent, there can be used one which contains a crosslinking agent having 2 or more groups having reactivity with a crosslinkable functional group that the polymer (A) or binder resin contained in the textile printing agent optionally has.

Examples of crosslinking agents include amino resins, such as a melamine resin, a benzoguanamine resin, and a urea resin; phenolic resins, such as trimethylolphenol and condensation products thereof; polyisocyanates, such as tetramethylene diisocyanate, diphenylmethane diisocyanate, hexamethylene diisocyanate, naphthalene diisocyanate, isophorone diisocyanate, xylylene diisocyanate, and modified isocyanates thereof and blocked isocyanates thereof; amines, such as an aliphatic amine, an aromatic amine, N-methylpiperazine, triethanolamine, morpholine, a dialkylaminoethanol, and benzyldimethylamine; polycarboxylic acids; acid anhydrides, such as phthalic anhydride, maleic anhydride, hexahydrophthalic anhydride, pyromellitic anhydride, benzophenonetetracarboxylic anhydride, and ethylene glycol bistrimellitate; epoxy compounds, such as a bisphenol A epoxy resin, a phenolic epoxy resin, a glycidyl methacrylate copolymer, a glycidyl carboxylate resin, and an alicyclic epoxy; and alcohols, such as polyether polyol, polybutadiene glycol, polycaprolactone polyol, and trishydroxyethyl isocyanate.

The crosslinking agent is preferably incorporated in an amount that is comparable with the crosslinkable functional groups of the polymer (A) and binder resin, and is preferably used in an amount of 20% by mass or less, more preferably 10% by mass or less, further preferably 7% by mass or less, based on the mass of the crosslinkable functional groups of the polymer (A) and binder resin.

(Material to be printed)

The textile printing agent of the present invention can be used in printing on a cloth, a synthetic leather, a natural leather, or the like. The textile printing agent of the present invention is especially advantageously used in printing on a cloth.

The cloth used in the present invention is preferably a medium formed from a fiber, and may be either a woven material or nonwoven fabric. With respect to the material for cloth, a cloth formed from an arbitrary natural or synthetic fiber, such as cotton, silk, wool, linen, nylon, polyester, polyurethane, or rayon, can be used.

(Setting)

The textile printing agent of the present invention is used as a textile printing agent of a green color or blue color, and further can be used in combination with a textile printing agent of a yellow color, magenta color, cyan color, or black color, which are basic colors, or of a blue color or the like. These textile printing agents can be obtained in the same manner as in the preparation of the textile printing agent of a green color or red color of the present invention except that, instead of the polyhalogenated metallophthalocyanine pigment and diketopyrrolopyrrole pigment used in the textile printing agent of a green color or red color of the present invention, pigments having color development for the respective colors are used. Needless to say, the textile printing agent of the present invention may be used in combination with a commercially available textile printing agent.
With respect to the usable pigment, specifically, known inorganic pigments and organic pigments which are capable of being dispersed in water or a water-soluble organic solvent can be used. Examples of inorganic pigments include titanium oxide, iron oxide, and carbon black produced by a known method, such as a contact method, a furnace method, or a thermal method. With respect to the organic pigment, an azo pigment (including an azo lake, an insoluble azo pigment, a condensed azo pigment, a chelate azo pigment, and the like), polycyclic pigments (e.g. , a phthalocyanine pigment, a perylene pigment, a perynone pigment, an anthraquinone pigment, a quinacridone pigment, a dioxazine pigment, a thioindigo pigment, an isoindolinone pigment, and a quinophralone pigment), dye chelates (e.g., a basic dye chelate and an acid dye chelate), a nitro pigment, a nitroso pigment, aniline black, and the like can be used.
Specific examples of pigments include carbon black, for example, No. 2300, No. 2200B, No. 900, No. 980, No. 33, No. 40, No, 45, No. 45L, No. 52, HCF88, MCF88, MA7, MA8, MA100, each of which is manufactured by Mitsubishi Chemical Corporation; Raven 5750, Raven 5250, Raven 5000, Raven 3500, Raven 1255, Raven 700, each of which is manufactured by Columbia Carbon Corporation; Regal 400R, Regal 330R, Regal 660R, Mogul L, Mogul 700, Monarch 800, Monarch 880, Monarch 900, Monarch 1000, Monarch 1100, Monarch 1300, Monarch 1400, each of which is manufactured by Cabot Specialty Chemicals Inc.; and Color Black FW1, Color Black FW2, Color Black FW2V, Color Black FW18, Color Black FW200, Color Black S150, Color Black S160, Color Black S170, Printex 35, Printex U, Printex V, Printex 1400U, Special Black 6, Special Black 5, Special Black 4, Special Black 4A, NIPEX 150, NIPEX 160, NIPEX 170, NIPEX 180, each of which is manufactured by Degussa AG.
Specific examples of pigments used in a yellow ink include C.I. Pigment Yellow 1, 2, 12, 13, 14, 16, 17, 73, 74, 75, 83, 93, 95, 97, 98, 109, 110, 114, 120, 128, 129, 138, 150, 151, 154, 155, 174, 180, 185.
Specific examples of pigments used in a magenta ink include C.I. Pigment Red 5, 7, 12, 48 (Ca), 48 (Mn), 57 (Ca), 57:1, 112, 122, 123, 146, 168, 176, 184, 185, 202, 209.
Specific examples of pigments used in a cyan ink include C.I. Pigment Blue 1, 2, 3, 15, 15:3, 15:4, 15:5, 15:6, 16, 22, 60, 63, 66.
Specific examples of pigments used in a red ink include C.I. Pigment Red 254, C.I. Pigment Red 255, C.I. Pigment Red 264, C.I. Pigment Red 270, and C.I. Pigment Red 272.
Specific examples of pigments used in an orange color ink include C.I. Pigment Orange 71, C.I. Pigment Orange 73, and C.I. Pigment Orange 81.
The pigment used in the present invention can be used in any of a dry powder form and a wet cake form. These pigments may be used individually or in combination.

Examples

Hereinbelow, the effects of the present invention will be described in detail with reference to the following Examples and Comparative Examples.

(Synthesis Example for polymer (A))

(Synthesis Example 1)

n-Butyllithium (BuLi) as a polymerization initiator and styrene (St) as a first monomer were introduced from tube reactors P1 and P2 in Fig. 1 into a T-shaped micromixer M1 in Fig. 1, and subjected to living anionic polymerization to form a polymer.
Then, the obtained polymer was transferred through a tube reactor R1 in Fig. 1 to a T-shaped micromixer M2 in Fig. 1, and the propagation end of the polymer was trapped by a reaction controlling agent (1,1-diphenylethylene (DPE)) introduced from a tube reactor P3 in Fig. 1.
Then, as a second monomer, tert-butyl methacrylate (t-BMA) was introduced from a tube reactor P4 shown in Fig. 1 into a T-shaped micromixer M3, and subjected to continuous living anionic polymerization reaction, together with the polymer transferred through a tube reactor R2 in Fig. 1. Then, the reaction was quenched by methanol, thereby

producing a block copolymer (PA-1).

In this instance, the whole of the microreactor was completely immersed in a constant temperature bath such that the reaction temperature was set to 24°C. Further, the monomers and the reaction controlling agent to be introduced to the microreactor each were dissolved in tetrahydrofuran (THF), and a commercially available 2.6 M hexane solution of BuLi was diluted with hexane, and the dilution concentrations and introducing speeds therefor were controlled so as to achieve the molar ratio for the block copolymer (PA-1) shown below.

Molar ratio for the block copolymer (PA-1):

Polymerization initiator/first monomer/reaction controlling agent/second monomer = 1.0/13.3/1.0/8.1

The obtained block copolymer (PA-1) was treated with a cation exchange resin to hydrolyze a t-butoxycarbonyl group of the t-BMA block, thereby reproducing a carboxyl group. The reaction solution was distilled under a reduced pressure, and the resultant solid was pulverized to obtain a powder of a polymer (P-1) as a polymer (A).

With respect to the obtained polymer (A), a number average molecular weight, an acid value, a solubility in water, whether fine particles are present or not at a neutralization rate of 100%/average particle diameter (nm), and a surface tension (dyn/cm) are shown in the table below.

(Synthesis Example 2)

BuLi as a polymerization initiator and St as a first monomer were introduced from tube reactors P1 and P2 in Fig. 1 into a T-shaped micromixer M1 in Fig. 1, and subjected to living anionic polymerization to form a polymer.

Then, the obtained polymer was transferred through a tube reactor R1 in Fig. 1 to a T-shaped micromixer M2 in Fig. 1, and the propagation end of the polymer was trapped by a reaction controlling agent ($\alpha$-methylstyrene ($\alpha$-MeSt)) introduced from a tube reactor P3 in Fig. 1.

Then, as a second monomer, t-BMA was introduced from a tube reactor P4 shown in Fig. 1 into a T-shaped micromixer M3, and subjected to continuous living anionic polymerization reaction, together with the polymer transferred through a tube reactor R2 in Fig. 1. Then, the reaction was quenched by methanol, thereby producing a block copolymer (PA-2).

In this instance, the whole of the microreactor was completely immersed in a constant temperature bath so that the reaction temperature was set to 24°C. Further, the monomers and reaction controlling agent introduced to the microreactor were individually dissolved in THF, and a commercially available 2.6 M hexane solution of BuLi was diluted with hexane, and the dilution concentrations and introducing speeds therefor were controlled so as to achieve the molar ratio for the block copolymer (PA-2) shown below.

Molar ratio for the block copolymer (PA-2):

Polymerization initiator/first monomer/reaction controlling agent/second monomer = 1.0/12.0/1.3/8.1

The obtained block copolymer (PA-2) was treated with a cation exchange resin for hydrolysis, and the reaction solution was distilled under a reduced pressure, and the resultant solid was pulverized to obtain a powder of a polymer (P-13).

(Comparative Synthesis Example 1: Synthesis Example of polymer (PH-1) for Comparative Example)

(Method for preparing a random polymer)

100 Parts of methyl ethyl ketone was charged into a reaction vessel having a stirring apparatus, a dropping apparatus, and a reflux apparatus, and the inside of the reaction vessel was purged with nitrogen gas while stirring. Methyl ethyl ketone was allowed to be refluxed while the inside of the reaction vessel was heated in a nitrogen gas atmosphere, and then a mixture of 74 parts of St, 11 parts of acrylic acid, 15 parts of methacrylic acid, and 8 parts of a polymerization initiator ("V-75", manufactured by Wako Pure Chemical Industries, Ltd.) was dropwise added to the reaction vessel from the dropping apparatus over 2 hours. The temperature of the reaction system in the middle of the dropwise addition was allowed to be maintained at 80°C.

After completion of the dropwise addition, the reaction was further continued at the same temperature for 25 hours. During the reaction, while checking the consumption of the raw materials, the polymerization initiator was appropriately further added. After completion of the reaction, methyl ethyl ketone was distilled off under a reduced pressure, and the resultant solid was pulverized to obtain a powder of a polymer (PH-1).

The polymer (PH-1) had a number average molecular weight of 5,255, a weight average molecular weight of 9,000, and an acid value of 185 mg KOH/g.

(Method for measuring physical property values of a polymer)

Physical property values of the obtained polymers (A) were measured as follows.

(Method for measuring a number average molecular weight (Mn) and a weight average molecular weight (Mw))

The measurement was performed by a gel permeation chromatography (GPC) method under the conditions shown below.

Measurement apparatus: High-speed GPC apparatus ("HLC-8220GPC", manufactured by Tosoh Corp.)
Columns: The columns shown below, manufactured by Tosoh Corp., which are connected in series were used.

"TSKgel G5000" (7.8 mm I.D. × 30 cm) × 1
"TSKgel G4000" (7.8 mm I.D. × 30 cm) × 1
"TSKgel G3000" (7.8 mm I.D. × 30 cm) × 1
"TSKgel G2000" (7.8 mm I.D. × 30 cm) × 1

Detector: RI (differential refractometer)
Column temperature: 40°C
Eluent: Tetrahydrofuran (THF)
Flow rate: 1.0 mL/minute
Sample amount per injection: 100 μL (THF solution having a sample concentration of 0.4% by mass)
Standard sample: A calibration curve was prepared using the standard polystyrenes shown below.

(Standard polystyrenes)

"TSKgel standard polystyrene A-500", manufactured by Tosoh Corp.
"TSKgel standard polystyrene A-1000", manufactured by Tosoh Corp.
"TSKgel standard polystyrene A-2500", manufactured by Tosoh Corp.
"TSKgel standard polystyrene A-5000", manufactured by Tosoh Corp.
"TSKgel standard polystyrene F-1", manufactured by Tosoh Corp.
"TSKgel standard polystyrene F-2", manufactured by Tosoh Corp.
"TSKgel standard polystyrene F-4", manufactured by Tosoh Corp.
"TSKgel standard polystyrene F-10", manufactured by Tosoh Corp.
"TSKgel standard polystyrene F-20", manufactured by Tosoh Corp.
"TSKgel standard polystyrene F-40", manufactured by Tosoh Corp.
"TSKgel standard polystyrene F-80", manufactured by Tosoh Corp.
"TSKgel standard polystyrene F-128", manufactured by Tosoh Corp.
"TSKgel standard polystyrene F-288", manufactured by Tosoh Corp.
"TSKgel standard polystyrene F-550", manufactured by Tosoh Corp.

The measurement was conducted in accordance with JIS test method K 0070-1992. 0.5 g of a polymer was dissolved in a tetrahydrofuran (THF) solvent, and the resultant solution was subjected to titration with a 0.1 M alcohol solution of potassium hydroxide using phenolphthalein as an indicator to determine an acid value.

(Method for measuring a solubility in water)

0.5 g of a polymer, of which the particle diameter had been controlled to be in the range of from 250 to 90 μm using sieves respectively having a sieve opening of 250 μm and a sieve opening of 90 μm, was contained in a bag obtained by processing a 400-mesh metal mesh, and immersed in 50 ml of water and allowed to stand at a temperature of 25°C for 24 hours while gently stirring. After being immersed for 24 hours, the 400-mesh metal mesh containing therein the polymer was dried in a dryer set to 110°C for 2 hours. With respect to the 400-mesh metal mesh containing therein the polymer before and after the immersion in water, a change of the weight was measured, and a solubility of the polymer was calculated from the following equation.

[Math. 4]

$$\text{Solubility (g/100 ml)} = (\text{Polymer-containing 400-mesh metal mesh before immersion (g)} - \text{Polymer-containing 400-mesh metal mesh after immersion (g)}) \times 2$$

(Method for judging whether fine particles are formed in water, and method for measuring an average particle diameter (nm))

(1) An acid value of a polymer is determined in accordance with the above-mentioned method for measuring an acid value.
(2) 1 g of the polymer is added to 50 ml of water, and then a 0.1 mol/L aqueous solution of potassium hydroxide is added thereto in such an amount that the polymer is 100% neutralized in terms of the acid value of the polymer determined in the item (1) above.
(3) The 100% neutralized solution is irradiated with ultrasonic waves in an ultrasonic cleaner (Ultrasonic cleaner US-102, manufactured by SND Co., Ltd.; 38 kHz self-induced oscillation) to perform dispersing at a temperature of 25°C for 2 hours, and then allowed to stand at room temperature for 24 hours.

After allowed to stand for 24 hours, a sample liquid was taken from the liquid at a depth of 2 centimeters from the surface of the resultant, and, using a dynamic light-scattering particle diameter measurement apparatus "Microtrac particle size distribution analyzer UPA-ST150", manufactured by Nikkiso Co., Ltd., the sample liquid was checked as to whether light scattering information due to the formation of fine particles was obtained, in order to judge whether or not fine particles were present. Simultaneously, an average particle diameter was measured.

(Method for measuring a surface tension)

With respect to the same sample liquid as the sample liquid obtained in the above-mentioned method for judging whether fine particles are formed in water, a value measured using a Wilhelmy surface tensiometer was used as a surface tension.
With respect to the polymers obtained in the Synthesis Examples and Comparative Synthesis Example, the raw materials, reaction conditions, and physical property values are shown in the tables below.

[Table 1]

| Table 1 | | Synthesis Example 1 | Synthesis Example 2 |
|---|---|---|---|
| Polymer (A) | | PA-1 | PA-2 |
| Reaction temperature | | 24°C | 24°C |
| Polymerization initiator | Type | BuLi | BuLi |
| | Mol | 1.0 | 1.0 |
| First monomer | Type | St | St |
| | Mol | 13.3 | 12.0 |
| Reaction controlling agent | Type | DPE | $\alpha$-MeSt |
| | Mol | 1.0 | 1.3 |
| Molar ratio of polymer block ($A^2$) formed of first monomer and polymer block ($A^3$) formed of second monomer | Type | t-BMA | t-BMA |
| | Mol | 8.1 | 8.1 |

(continued)

| Table 1 | | Synthesis Example 1 | Synthesis Example 2 |
|---|---|---|---|
| Molar ratio of polymer block ($A^2$) formed of first monomer and polymer block ($A^3$) formed of second monomer | $A^2$:$A^3$= | 100:61 | 100:68 |
| Number average molecular weight | | 2317 | 2382 |
| Acid value | mg KOH/g | 145 | 145 |
| Solubility in water (g/100 ml | | 0.0034 | 0.0084 |
| Fine particles are present or not at neutralization rate of 100%/Average particle diameter (nm) | | Present/344 | Present/82 |
| Surface tension (dyn/cm) | | 66.6 | 66.2 |

[Table 2]

| Table 2 | | Comparative Synthesis Example 1 |
|---|---|---|
| Polymer | | PH-1 |
| Monomer | Type | St |
| | Mol | 68.5 |
| Monomer | Type | AA |
| | Mol | 14.7 |
| Monomer | Type | MAA |
| | Mol | 16.8 |
| Number average molecular weight | | 5255 |
| Acid value | mg KOH/g | 185 |
| Solubility in water (g/100 ml) | | 0.031 |
| Fine particles are present or not at neutralization rate of 100%/Average particle diameter (nm) | | Not present |
| Surface tension (dyn/cm) | | 45.0 |

In Tables 1 and 2, BuLi denotes n-butyl lithium, St denotes styrene, DPE denotes 1,1-diphenylethylene, αMeSt denotes α-methylstyrene, and tBMA denotes tert-butyl methacrylate.

(Method for producing an aqueous pigment dispersion)

An aqueous pigment dispersion was obtained by any of the methods shown below. The types of the polyhalogenated metallophthalocyanine pigments and polymers (A) used and the amounts of the raw materials used are described in the tables below.

<Method (X1) for producing an aqueous pigment dispersion using an atmospheric pressure kneader>

120 Parts by mass of a polyhalogenated metallophthalocyanine pigment or a diketopyrrolopyrrole pigment and 36 parts by mass of PA-1 or PA-2, which is the polymer (A) obtained by the above-mentioned synthesis method, or PH-1 obtained by the Comparative Synthesis Example were charged into a 0.2 L atmospheric pressure kneader (manufactured by Advance Co., Ltd.), and mixed with each other at a jacket temperature of 80°C (number of revolutions of the blade: 40 rpm). Then, to the resultant mixture, 52 parts by mass of diethylene glycol as a water-soluble solvent and 15 parts by mass of a 34% by mass aqueous solution of potassium hydroxide as a basic compound were added, and the

resultant mixture was kneaded for one hour to perform a step 1.

Subsequently, 360 parts by mass of ion-exchanged water was slowly added to the kneaded mixture in the vessel while stirring, and then a mixture of 68 parts by mass of diethylene glycol and 149 parts by mass of ion-exchanged water (wherein the amount of the ion-exchanged water is selected so that the total amount of the ion-exchanged water and (15 parts by mass of) the already added 34% by mass aqueous solution of potassium hydroxide becomes 164 parts by mass) was added to and mixed with the above kneaded mixture to perform a step 2, thereby obtaining an aqueous pigment dispersion having a pigment concentration of 15.0% by mass.

<Method (X2) for producing an aqueous pigment dispersion using an intensive mixer>

150 Parts by mass of a polyhalogenated metallophthalocyanine pigment or a diketopyrrolopyrrole pigment, 45 parts by mass of PA-1 or PA-2, which is the polymer (A) obtained by the above-mentioned synthesis method, or PH-1 obtained by the Comparative Synthesis Example, 95 parts by mass of triethylene glycol as a water-soluble solvent, and 19 parts by mass of a 34% by mass aqueous solution of potassium hydroxide were charged into a 1.0 L intensive mixer (manufactured by Nippon Eirich Co., Ltd.), and kneaded at a rotor peripheral speed of 2.94 m/s and at a pan peripheral speed of 1 m/s for 25 minutes to perform a step 1.

Subsequently, 450 parts by mass of ion-exchanged water was slowly added to the kneaded mixture in the intensive mixer vessel while stirring, and then a mixture of 55 parts by mass of triethylene glycol as a water-soluble solvent and 186 parts by mass of ion-exchanged water was added to and mixed with the above kneaded mixture to perform a step 2, thereby obtaining an aqueous pigment dispersion having a pigment concentration of 15.0% by mass.

<Method for producing a binder resin>

<Synthesis of a polycarbonate urethane resin>

In a vessel having a thermometer, a nitrogen gas introducing pipe, and a stirrer and being purged with nitrogen gas, 500 parts by mass of polycarbonate polyol (number average molecular weight: 2,000) which is obtained by reacting 1, 6-hexanediol and methyl carbonate with each other, 37.7 parts by mass of 2,2-dimethylolpropionic acid, and 420 parts by mass of methyl ethyl ketone were added and uniformly mixed. Then, 92.4 parts by mass of tolylene diisocyanate was added to the resultant mixture, subsequently 0.1 part by mass of dibutyltin dilaurate was added thereto, and the resultant mixture was subjected to reaction at 80°C for 7 hours, thereby obtaining an organic solvent solution of polyurethane having a weight average molecular weight of 37,000 (acid value: 25).

Then, the obtained solution was cooled to 50°C, and 29.8 parts by mass of triethylamine and 2, 069 parts by mass of water were added to the solution, and methyl ethyl ketone was removed from the solution under a reduced pressure at a temperature of 40 to 60°C, and water was added to the residue so as to adjust the concentration, thereby obtaining a resin composition (PUD-1) having the urethane resin dispersed in an aqueous medium and having a nonvolatile content of 23% by mass.

<Method for producing an acrylic copolymer>

300 Parts by mass of n-butyl acrylate, 50 parts by mass of methyl methacrylate, 100 parts by mass of styrene, 5 parts by mass of 2-hydroxyethyl methacrylate, 10 parts by mass of acrylic acid, 5 parts by mass of glycidyl methacrylate, 200 parts by mass of water, and 5 parts by mass of a nonionic emulsifier (polyoxyethylene distyrenated phenyl ether; "NOIGEN EA-207D", manufactured by Dai-ichi Kogyo Seiyaku Co., Ltd.) were mixed together, and then emulsified using a homogenizer ("TK Homogenizing Disper", manufactured by Tokushu Kika Kogyo Co., Ltd.) to prepare a monomer emulsion.

Then, 300 parts by mass of water was placed in a flask equipped with a stirrer, a nitrogen gas introducing pipe, and a reflux condenser and the temperature was increased to 50°C while stirring and mixing in a nitrogen gas atmosphere, and then 2 parts by mass of ammonium persulfate (hereinafter, abbreviated to "APS") and 2 parts by mass of sodium metabisulfite (hereinafter, abbreviated to "SMS") were added to the flask and dissolved. Then, the above-prepared monomer emulsion, 20 parts by mass of a 5% by mass aqueous solution of APS, and 20 parts by mass of a 5% by mass aqueous solution of SMS were dropwise added to the flask over 3 hours. The temperature in the flask during the dropwise addition was controlled to be 50 to 60°C. After completion of the dropwise addition, the reaction was further conducted at 60°C for one hour to obtain an acrylic copolymer (A-1). Then, the acrylic copolymer was cooled to room temperature, and then 3.5 parts by mass of 25% by mass aqueous ammonia was added to thereby neutralize the acrylic copolymer, and water was added such that the resin content became 45% by mass and uniformly mixed, thereby obtaining an aqueous resin emulsion of the acrylic copolymer (A-1).

<Example: Preparation of a textile printing agent>

To 20 parts by mass of the aqueous pigment dispersion were added the binder resin obtained by the above-mentioned production method, and a mixture of a surfactant, a water-soluble organic solvent, and water so that the resultant mixture had the formulation shown in the tables below, and the mixture was satisfactorily stirred using a dispersing stirrer (TK Homogenizing Disper L, manufactured by Tokushu Kika Kogyo Co., Ltd.) to obtain a textile printing agent.

The content of the binder resin (in terms of a solids content) in the whole of the textile printing agent was adjusted to 5% by mass.

(Evaluation method)

The obtained textile printing agent was evaluated by making measurements of the items shown below.

<Volume average particle diameter>

The prepared textile printing agent was diluted to a 1/1,000 concentration, and subjected to measurement using Microtrac UPA-ST150 (manufactured by Nikkiso Co., Ltd.). An average of three measurements was taken as a measured value.

<Number of coarse particles>

The prepared textile printing agent was diluted to a 1/10 concentration, and subjected to measurement using AccuSizer 780APS (manufactured by International Business Co., Ltd.). The measured number of coarse particles was converted to the number of particles per 1 ml of the textile printing agent before diluted. With respect to the number of particles shown in the tables below, a unit of ($\times 10^4$ particles/ml) was used.

In the present invention, a textile printing agent in which the number of 1.0 μm or more coarse particles is more than 1,000 $\times 10^4$ particles/ml was unacceptable.

<Preparation of a cloth for evaluation>

Using each of the textile printing agents obtained in the above Examples and Comparative Examples, the surface of cloth was printed by the method shown below to obtain a cloth for each evaluation.

<Preparation of a cloth for evaluation of fastness: screen method>

Using an auto-screen printing machine (manufactured by Tsujii Someki Kogyo Co., Ltd.), printing evaluation was conducted by a screen printing method. Using a 135-mesh striped screen, a polyester/cotton cloth was printed with each textile printing agent, and then dried at 120°C for 2 minutes, and subjected to heating treatment at 150°C for 2 minutes. The printed materials were visually evaluated, and, as a result, all of them were found to have good quality.

<Preparation of a cloth for evaluation: ink-jet recording method>

An ink cartridge for an ink-jet printer (MJ-510C, manufactured by Seiko Epson Corporation) was filled with a textile printing agent, and printing was conducted. A polyester/cotton cloth was printed with each textile printing agent, and then dried at 120°C for 2 minutes, and subjected to heating treatment at 150°C for 2 minutes. The printed materials were visually evaluated, and, as a result, one in which a white streak was not able to be visually confirmed was rated as "Good", and one in which a white streak was able to be confirmed was rated as "Poor".

<Method for evaluating fastness to washing>

With respect to the printed material obtained by an ink-jet recording method, a test in accordance with JIS L 0844:2005 A-4 method was repeated 30 times and then, in accordance with the criteria for a visual evaluation method using the gray scale for change in color of JIS L 0801:2004, a grade was judged from class 1 through class 5. In the grade, class 1 indicates that color fading is the most marked, and, as the grade is closer to class 5, color fading becomes less marked.

<Method for evaluating (dry and wet) fastness to rubbing>

With respect to the printed material obtained by ink-jet printing, dry and wet tests in accordance with JIS L 0849:2004 were conducted using a Gakushin-type tester for fastness to rubbing and then, in accordance with the criteria for a visual evaluation method using the gray scale for change in color of JIS L 0801:2004, a grade was judged from class 1 through class 5. In the grade, class 1 indicates that color fading is the most marked, and, as the grade is closer to class 5, color fading becomes less marked.

The compositions of the textile printing agents in the Examples and Comparative Examples and the results of the evaluations are shown in Tables 3 to 5.

[Table 3]

| Table 3 | | | Example 1 | Example 2 | Example 3 | Example 4 | Example 5 | Example 6 | Example 7 |
|---|---|---|---|---|---|---|---|---|---|
| Textile printing agent | Aqueous pigment dispersion | Method for producing an aqueous pigment dispersion | X1 | X2 | X2 | X2 | X2 | X2 | X2 |
| | | Pigment | PG7+PG36 | PG7+PG36 | PG36 | PG58 | PG7+PG36 | PG36 | PG58 |
| | | Polymer (A) | PA-1 | PA-1 | PA-1 | PA-1 | PA-2 | PA-2 | PA-2 |
| | | Number average molecular weight of polymer (A) | 2317 | 2317 | 2317 | 2317 | 2382 | 2382 | 2382 |
| | | Acid value of polymer (A) | 145 | 145 | 145 | 145 | 145 | 145 | 145 |
| | | [Polymer (A)/pigment] mass ratio | 0.3 | 0.3 | 0.3 | 0.3 | 0.3 | 0.3 | 0.3 |
| | | Content (% by mass) | 20 | 20 | 20 | 20 | 20 | 20 | 20 |
| | Binder resin | No. | PUD-1 | PUD-1 | PUD-1 | PUD-1 | PUD-1 | PUD-1 | PUD-1 |
| | | Solids content (% by mass) | 5.0 | 5.0 | 5.0 | 5.0 | 5.0 | 5.0 | 5.0 |
| | Surfactant | SURFYNOL 440 (% by mass) | 2.0 | 2.0 | 2.0 | 2.0 | 2.0 | 2.0 | 2.0 |
| | Water-soluble organic solvent | Triethylene glycol monobutyl ether (% by mass) | 5.0 | 5.0 | 5.0 | 5.0 | 5.0 | 5.0 | 5.0 |
| | Humectant | Glycerol (% by mass) | 15.0 | 15.0 | 15.0 | 15.0 | 15.0 | 15.0 | 15.0 |
| | Ion-exchanged water (% by mass) | | Balance | Balance | Balance | Balance | Balance | Balance | Balance |
| Total (% by mass) | | | 100.0 | 100.0 | 100.0 | 100.0 | 100.0 | 100.0 | 100.0 |
| Textile printing agent evaluation | Volume average particle diameter (nm) | | 117 | 108 | 74 | 72 | 103 | 71 | 69 |
| | Number of 1.0 or more coarse particles ($\times 10^4$ particles/ml) | | 191 | 180 | 182 | 201 | 161 | 165 | 182 |

(continued)

| Table 3 | | Example 1 | Example 2 | Example 3 | Example 4 | Example 5 | Example 6 | Example 7 |
|---|---|---|---|---|---|---|---|---|
| Printed material evaluation | Results of visual evaluation of printed material (Screen) | Good | Good | Good | Good | Good | Good | Good |
| | Results of visual evaluation of printed material (Ink-jet) | Good | Good | Good | Good | Good | Good | Good |
| | Fastness to washing | Class 3 | Class 3 | Class 3 | Class 3 | Class 3.5 | Class 3.5 | Class 3.5 |
| | Fastness to rubbing (Dry) | Class 3 | Class 3.5 | Class 3.5 | Class 3.5 | Class 3.5 | Class 3.5 | Class 3.5 |
| | Fastness to rubbing (Wet) | Class 3 | Class 3 | Class 3 | Class 3 | Class 3 | Class 3 | Class 3 |

[Table 4]

| Table 4 | | | Example 8 | Example 9 | Example 10 | Example 11 | Example 12 | Example 13 |
|---|---|---|---|---|---|---|---|---|
| Textile printing agent | Aqueous pigment dispersion | Method for producing an aqueous pigment dispersion | X2 | X2 | X2 | X2 | X2 | X2 |
| | | Pigment | PG7+PG36 | PG36 | PG58 | PG7+PG36 | PG36 | PG58 |
| | | Polymer (A) | PA-1 | PA-1 | PA-1 | PA-2 | PA-2 | PA-2 |
| | | Number average molecular weight of polymer (A) | 2317 | 2317 | 2317 | 2382 | 2382 | 2382 |
| | | Acid value of polymer (A) | 145 | 145 | 145 | 145 | 145 | 145 |
| | | [Polymer (A)/pigment] mass ratio | 0.3 | 0.3 | 0.3 | 0.3 | 0.3 | 0.3 |
| | | Content (% by mass) | 20 | 20 | 20 | 20 | 20 | 20 |
| | Binder resin | No. | A-1 | A-1 | A-1 | A-1 | A-1 | A-1 |
| | | Solids content (% by mass) | 5.0 | 5.0 | 5.0 | 5.0 | 5.0 | 5.0 |
| | Surfactant | SURFYNOL 440 (% by mass) | 2.0 | 2.0 | 2.0 | 2.0 | 2.0 | 2.0 |
| | Water-soluble organic solvent | Triethylene glycol monobutyl ether (% by mass) | 5.0 | 5.0 | 5.0 | 5.0 | 5.0 | 5.0 |
| | Humectant | Glycerol (% by mass) | 15.0 | 15.0 | 15.0 | 15.0 | 15.0 | 15.0 |
| | Ion-exchanged water (% by mass) | | Balance | Balance | Balance | Balance | Balance | Balance |
| Total (% by mass) | | | 100.0 | 100.0 | 100.0 | 100.0 | 100.0 | 100.0 |
| Textile printing agent evaluation | Volume average particle diameter (nm) | | 106 | 72 | 70 | 103 | 68 | 67 |
| | Number of 1.0 or more coarse particles (×104 particles/ml) | | 178 | 180 | 197 | 162 | 168 | 185 |

(continued)

| Table 4 | | Example 8 | Example 9 | Example 10 | Example 11 | Example 12 | Example 13 |
|---|---|---|---|---|---|---|---|
| Printed material evaluation | Results of visual evaluation of printed material (Screen) | Good | Good | Good | Good | Good | Good |
| | Results of visual evaluation of printed material (Ink-jet) | Good | Good | Good | Good | Good | Good |
| | Fastness to washing | Class 2.5 | Class 2.5 | Class 2.5 | Class 3 | Class 3 | Class 3 |
| | Fastness to rubbing (Dry) | Class 3 | Class 3 | Class 3 | Class 3 | Class 3 | Class 3 |
| | Fastness to rubbing (Wet) | Class 3 | Class 3 | Class 3 | Class 3 | Class 3 | Class 3 |

[Table 5]

| Table 5 | | | Comparative Example 1 | Comparative Example 2 | Comparative Example 3 |
|---|---|---|---|---|---|
| Textile printing agent | Aqueous pigment dispersion | Method for producing an aqueous pigment dispersion | X2 | X2 | X2 |
| | | Pigment | PG36 | PG36 | PG36 |
| | | Polymer (A) | PH-1 | PH-1 | PH-1 |
| | | Number average molecular weight of polymer (A) | 5255 | 5255 | 5255 |
| | | Acid value of polymer (A) | 185 | 185 | 185 |
| | | [Polymer (A)/pigment] mass ratio | 0.3 | 0.3 | 0.3 |
| | | Content (% by mass) | 20 | 20 | 20 |
| | Binder resin | No. | PUD-1 | A-1 | - |
| | | Solids content (% by mass) | 5.0 | 5.0 | 5.0 |
| | Surfactant | SURFYNOL 440 (% by mass) | 2.0 | 2.0 | 2.0 |
| | Water-soluble organic solvent | Triethylene glycol monobutyl ether (% by mass) | 5.0 | 5.0 | 5.0 |
| | Humectant | Glycerol (% by mass) | 15.0 | 15.0 | 15.0 |
| | Ion-exchanged water (% by mass) | | | Balance | Balance |
| Total (% by mass) | | | 100.0 | 100.0 | 100.0 |
| Textile printing agent evaluation | Volume average particle diameter (nm) | | 72 | 75 | 78 |
| | Number of 1.0 μm or more coarse particles ($\times 10^4$ particles/ml) | | 1825 | 1784 | 1821 |
| Printed material evaluation | Results of visual evaluation of printed material (Screen) | | Good | Good | Good |
| | Results of visual evaluation of printed material (Ink-jet) | | Good | Good | Good |
| | Fastness to washing | | Class 2.5 | Class 2 | Class 1.5 |
| | Fastness to rubbing (Dry) | | Class 2.5 | Class 2.5 | Class 1.5 |
| | Fastness to rubbing (Wet) | | Class 2.5 | Class 2 | Class 1.5 |

In Tables 3 to 5,

PG36 denotes "FASTOGEN Green 2YK-MJ" or "FASTOGEN Green 2YK-CF",
PG7+PG36 denotes "FASTOGEN Green S-K", manufactured by DIC Corporation, which is a mixture of 90% or more of C.I. Pigment Green 7 and 1 to 5% of C.I. Pigment Green 36, and
PG58 denotes "FASTOGEN Green A110".

From the results shown in Tables 3 to 5, with respect to the textile printing agent of the present invention (Examples 1 to 10), it was found that the number of coarse particles, which may cause a white streak and the like in a

screen method or cause a discharge failure in an ink-jet recording method, was small, and that all the printed portions printed with the textile printing agent had excellent fastness . On the other hand, with respect to the textile printing agents in Comparative Examples 1 to 3, it was found that the number of coarse particles was large and the fastness was poor.

[Table 6]

| | | | Example 14 | Example 15 | Example 16 | Example 17 | Example 18 |
|---|---|---|---|---|---|---|---|
| Textile printing agent | Aqueous pigment dispersion | Method for producing an aqueous pigment dispersion | X1 | X2 | X2 | X2 | X2 |
| | | Pigment | PR254 | PR254 | PR254 | PR254 | PR254 |
| | | Polymer (A) | PA-1 | PA-1 | PA-2 | PA-1 | PA-2 |
| | | Number average molecular weight of polymer (A) | 2317 | 2317 | 2382 | 2317 | 2382 |
| | | Acid value of polymer (A) | 145 | 145 | 145 | 145 | 145 |
| | | [Polymer (A)/ pigment] mass ratio | 0.3 | 0.3 | 0.3 | 0.3 | 0.3 |
| | | Content (% by mass) | 20 | 20 | 20 | 20 | 20 |
| | Binder resin | No. | PUD-1 | PUD-1 | PUD-1 | A-1 | A-1 |
| | | Solids content (% by mass) | 5.0 | 5.0 | 5.0 | 5.0 | 5.0 |
| | Surfactant | SURFYNOL 440 (% by mass) | 2.0 | 2.0 | 2.0 | 2.0 | 2.0 |
| | Water-soluble organic solvent | Triethylene glycol monobutyl ether (% by mass) | 5.0 | 5.0 | 5.0 | 5.0 | 5.0 |
| | Humectant | Glycerol (% by mass) | 15.0 | 15.0 | 15.0 | 15.0 | 15.0 |
| | Ion-exchanged water (% by mass) | | Balance | Balance | Balance | Balance | Balance |
| Total (% by mass) | | | 100.0 | 100.0 | 100.0 | 100.0 | 100.0 |
| Textile printing agent evaluation | Volume average particle diameter (nm) | | 161 | 150 | 143 | 146 | 144 |
| | Number of 1.0 μm or more coarse particles ($\times 10^4$ particles/ml) | | 296 | 285 | 260 | 280 | 265 |
| Printed material evaluation | Results of visual evaluation of printed material (Screen) | | Good | Good | Good | Good | Good |
| | Results of visual evaluation of printed material (Ink-jet) | | Good | Good | Good | Good | Good |
| | Fastness to washing | | Class 3 | Class 3 | Class 3.5 | Class 2.5 | Class 3 |
| | Fastness to rubbing (Dry) | | Class 3 | Class 3.5 | Class 3.5 | Class 3 | Class 3 |
| | Fastness to rubbing (Wet) | | Class 3 | Class 3 | Class 3 | Class 3 | Class 3 |

[Table 7]

| | | | Comparative Example 4 | Comparative Example 5 | Comparative Example 6 |
|---|---|---|---|---|---|
| Textile printing agent recipe | Aqueous pigment dispersion | Method for producing an aqueous pigment dispersion | X2 | X2 | X2 |
| | | Pigment | PR254 | PR254 | PR254 |
| | | Polymer (A) | PH-1 | PH-1 | PH-1 |
| | | Number average molecular weight of polymer (A) | 5255 | 5255 | 5255 |
| | | Acid value of polymer (A) | 185 | 185 | 185 |
| | | [Polymer (A)/pigment] mass ratio | 0.3 | 0.3 | 0.3 |
| | | Content (% by mass) | 20 | 20 | 20 |
| | Binder resin | No. | PUD-1 | A-1 | - |
| | | Solids content (% by mass) | 5.0 | 5.0 | 5.0 |
| | Surfactant | SURFYNOL 440 (% by mass) | 2.0 | 2.0 | 2.0 |
| | Water-soluble organic solvent | Triethylene glycol monobutyl ether (% by mass) | 5.0 | 5.0 | 5.0 |
| | Humectant | Glycerol (% by mass) | 15.0 | 15.0 | 15.0 |
| | Ion-exchanged water (% by mass) | | Balance | Balance | Balance |
| Total (% by mass) | | | 100.0 | 100.0 | 100.0 |
| Textile printing agent evaluation | Volume average particle diameter (nm) | | 145 | 147 | 151 |
| | Number of 1.0 μm or more coarse particles (×$10^4$ particles/ml) | | 1905 | 1864 | 1901 |
| Printed material evaluation | Results of visual evaluation of printed material (Screen) | | Good | Good | Good |
| | Results of visual evaluation of printed material (Ink-jet) | | Good | Good | Good |
| | Fastness to washing | | Class 2.5 | Class 2 | Class 1.5 |
| | Fastness to rubbing (Dry) | | Class 2.5 | Class 2.5 | Class 1.5 |
| | Fastness to rubbing (Wet) | | Class 2.5 | Class 2 | Class 1.5 |

The abbreviation shown in the tables is as follows. PR.254: Abbreviation of C.I. Pigment Red 254, which denotes "Irgagin Red L 3630".

From the results shown in Table 3, it was found that all the printed portions printed with the textile printing agents of the present invention (Examples 14 to 18) had excellent fastness, whereas the textile printing agents in Comparative Examples 4 to 6 had poor fastness.

**Claims**

1. A textile printing agent, comprising a polyhalogenated metallophthalocyanine pigment or a diketopyrrolopyrrole pigment; water; an organic solvent; a binder resin; and, as a pigment dispersant, a polymer (A) having an anionic group, a solubility in water of 0.1 g/100 ml or less, and a number average molecular weight of 1,000 to 6,000, wherein the polymer (A) forms fine particles having a particle diameter of 5 to 1,000 nm in water when the polymer (A) is neutralized such that the neutralization rate of the anionic group by a basic compound is 100%,
wherein

- the solubility of the polymer (A) in water is defined as follows: 0.5 g of a polymer, of which the particle diameter has been controlled to be of from 250 to 90 μm using sieves respectively having a sieve opening of 250 μm and a sieve opening of 90 μm, is contained in a bag obtained by processing a 400-mesh metal mesh, and immersed in 50 ml of water and allowed to stand at a temperature of 25 °C for 24 hours while gently stirring; after being immersed for 24 hours, the 400-mesh metal mesh containing therein the polymer is dried in a dryer set to 110 °C for 2 hours; with respect to the 400-mesh metal mesh containing therein the polymer before and after the immersion in water, a change of the weight is measured, and the solubility of the polymer is calculated from the following equation:

Solubility (g/100 ml) = (Polymer-containing 400-mesh metal mesh before immersion (g) - Polymer-containing 400-mesh metal mesh after immersion (g)) × 2;

- the number average molecular weight of the polymer (A) is measured by gel permeation chromatography;
- the particle diameter is measured using a dynamic light-scattering particle diameter distribution measurement apparatus.

2. The textile printing agent according to claim 1, wherein the polymer (A) is a polymer represented by the following general formula (1):

[Chem. 1]

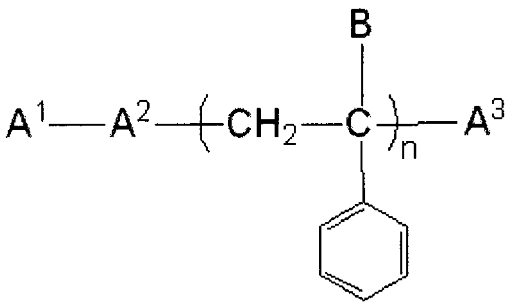

(1)

wherein $A^1$ represents an organolithium initiator residue, $A^2$ represents a polymer block of a monomer having an aromatic ring or a heterocycle, $A^3$ represents a polymer block having an anionic group, n represents an integer of 1 to 5, and B represents an aromatic group or an alkyl group.

3. The textile printing agent according to claim 1 or 2, wherein the polymer (A) has an acid value of 40 to 400 mg KOH/g, wherein the acid value of the polymer (A) is measured in accordance with JIS test method K 0070-1992.

4. The textile printing agent according to any one of claims 1 to 3, wherein the polymer (A) is a living anionic polymer produced by using a microreactor.

5. The textile printing agent according to any one of claims 1 to 4, wherein the binder resin is a urethane resin or an

acrylic resin.

6. A cloth article which is printed with the textile printing agent according to any one of claims 1 to 5.

7. A method for producing a textile printing agent, comprising, in this order, the step of obtaining a dispersion containing a polymer (A), a basic compound, a water-soluble organic solvent, and a polyhalogenated metallophthalocyanine pigment or a diketopyrrolopyrrole pigment, wherein the polymer (A) has an anionic group, a solubility in water of 0.1 g/100 ml or less, and a number average molecular weight of 1,000 to 6,000, and which forms fine particles having a diameter of 5 to 1,000 nm in water when the polymer (A) is neutralized such that the neutralization rate of the anionic group by a basic compound is 100%; the step of mixing the dispersion with water to obtain an aqueous pigment dispersion; and the step of mixing the aqueous pigment dispersion, a diluent solvent, a binder resin, and an additive; wherein the solubility of the polymer (A) in water, the number average molecular weight of the polymer (A) and the particle diameter are determined by the methods specified in claim 1.

**Patentansprüche**

1. Textildruckmittel, umfassend ein mehrfach halogeniertes Metallophthalocyanin-Pigment oder ein Diketopyrrolopyrrol-Pigment; Wasser; ein organisches Lösungsmittel; ein Harzbindemittel und als Pigmentdispergiermittel ein Polymer (A), das eine anionische Gruppe, eine Löslichkeit in Wasser von 0,1 g/100 ml oder weniger und ein zahlenmittleres Molekulargewicht von 1000 bis 6000 hat, wobei das Polymer (A) feine Partikel mit einem Partikeldurchmesser von 5 bis 1.000 nm in Wasser bildet, wenn das Polymer (A) so neutralisiert wird, dass die Neutralisierungsrate der anionischen Gruppe durch eine basische Verbindung 100% ist,
wobei
die Löslichkeit des Polymers (A) in Wasser wie folgt definiert ist: 0,5 g eines Polymers, dessen Partikeldurchmesser so reguliert wurde, dass er 250 bis 90 $\mu$m betrug, indem Siebe verwendet wurden, die ein Sieböffnung von 250 $\mu$m bzw. eine Sieböffnung von 90 $\mu$m haben, sind in einem Beutel, der durch Verarbeiten eines 400-mesh-Metallsiebs erhalten wurde, enthalten, und werden in 50 ml Wasser eingetaucht und bei einer Temperatur von 25°C für 24 Stunden unter leichtem Rühren stehen gelassen; nach Eintauchen für 24 Stunden wird das 400-Mesh-Metallsieb, das darin das Polymer enthält, in einem auf 110°C eingestellten Trockner für 2 Stunden getrocknet; bezüglich des 400-Mesh-Metallsiebs, das darin das Polymer enthält, wird eine Änderung des Gewichts zwischen vor und nach dem Eintauchen in Wasser gemessen, und die Löslichkeit des Polymers wird aus der folgenden Gleichung errechnet: Löslichkeit (g/100 ml) = (Polymer-enthaltendes 400-Mesh-Metallsieb vor Eintauchen (g) - Polymer-enthaltendes 400-Mesh-Metallsieb nach Eintauchen (g)) x 2;
das zahlenmittlere Molekulargewicht des Polymers (A) wird durch Gelpermeationschromatographie gemessen;
der Partikeldurchmesser wird unter Verwendung einer Apparatur zur Messung der dynamischen Lichtstreuungs-Partikeldurchmesserverteilung gemessen.

2. Textildruckmittel nach Anspruch 1, wobei das Polymer (A) ein Polymer ist, das durch die folgende allgemeine Formel (1) dargestellt wird:

[Chem.1]

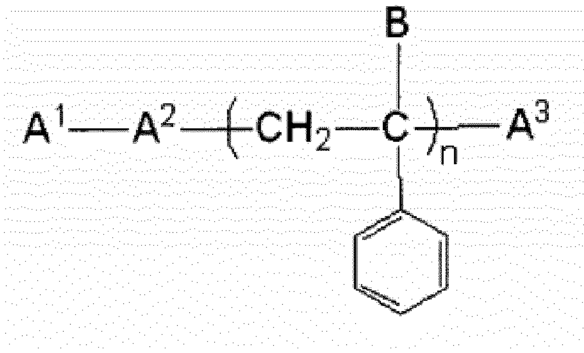

(1)

wobei $A^1$ einen Organolithiuminitiatorrest darstellt, $A^2$ einen Polymerblock eines Monomers, das einen aromatischen Ring oder einen Heterocyclus aufweist, darstellt, $A^3$ einen Polymerblock, der eine anionische Gruppe hat, darstellt,

n eine ganze Zahl von 1 bis 5 darstellt und B eine aromatische Gruppe oder eine Alkylgruppe darstellt.

3. Textildruckmittel nach Anspruch 1 oder 2, wobei das Polymer (A) eine Säurezahl von 40 bis 400 mg KOH/g hat, wobei die Säurezahl des Polymers (A) gemäß JIS-Testverfahren K 0070-1992 gemessen wird.

4. Textildruckmittel nach einem der Ansprüche 1 bis 3, wobei das Polymer (A) ein lebendes anionisches Polymer ist, das unter Verwendung eines Mikroreaktors hergestellt wird.

5. Textildruckmittel nach einem der Ansprüche 1 bis 4, wobei das Harzbindemittel ein Urethanharz oder ein Acrylharz ist.

6. Stoffartikel, der mit dem Textildruckmittel nach einem der Ansprüche 1 bis 5 bedruckt ist.

7. Verfahren zur Herstellung eines Textildruckmittels, umfassend, in dieser Reihenfolge, den Schritt des Herstellens einer Dispersion, die ein Polymer (A), eine basische Verbindung, ein wasserlösliches organisches Lösungsmittel und ein mehrfach halogeniertes Metallophthalocyanin-Pigment oder ein Diketopyrrolopyrrol-Pigment enthält, wobei das Polymer (A) eine anionische Gruppe, eine Löslichkeit in Wasser von 0,1 g/100 ml oder weniger und ein zahlenmittleres Molekulargewicht von 1.000 bis 6.000 hat und welches feine Partikel mit einem Partikeldurchmesser von 5 bis 1.000 nm in Wasser bildet, wenn das Polymer (A) so neutralisiert wird, dass die Neutralisierungsrate der anionischen Gruppe durch eine basische Verbindung 100% ist; den Schritt des Mischens der Dispersion mit Wasser unter Erhalt einer wässrigen Pigmentdispersion und den Schritt des Mischens der wässrigen Pigmentdispersion, eines Verdünnungslösungsmittels, eines Harzbindemittels und eines Additivs; wobei die Löslichkeit des Polymers (A) in Wasser, das zahlenmittlere Molekulargewicht des Polymers (A) und der Partikeldurchmesser durch die in Anspruch 1 spezifizierten Verfahren bestimmt werden.

## Revendications

1. Agent d'impression textile, comprenant un pigment de métallophtalocyanine polyhalogénée ou un pigment de dicétopyrrolopyrrole ; de l'eau ; un solvant organique ; une résine de liant ; et, en tant que dispersant de pigment, un polymère (A) ayant un groupe anionique, une solubilité dans l'eau de 0,1 g/100 ml ou moins, et un poids moléculaire moyen en nombre de 1 000 à 6 000, dans lequel le polymère (A) forme de fines particules ayant un diamètre de particule de 5 à 1 000 nm dans l'eau lorsque le polymère (A) est neutralisé de telle sorte que le taux de neutralisation du groupe anionique par un composé basique soit de 100%,
dans lequel

- la solubilité du polymère (A) dans l'eau est définie comme suit : 0,5 g d'un polymère dont le diamètre de particule a été commandé pour être de 250 à 90 μm en utilisant des tamis ayant respectivement une ouverture de tamis de 250 μm et une ouverture de tamis de 90 μm, est contenu dans un sac obtenu par traitement d'un treillis métallique de 400 mailles, et immergé dans 50 ml d'eau et laissé reposer à une température de 25 °C pendant 24 heures sous agitation douce ; après avoir été immergé pendant 24 heures, le treillis métallique de 400 mailles contenant le polymère en son sein est séché dans un sécheur réglé à 110 °C pendant 2 heures ; en ce qui concerne le treillis métallique de 400 mailles contenant le polymère en son sein avant et après l'immersion dans l'eau, un changement du poids est mesuré, et la solubilité du polymère est calculée à partir de l'équation suivante :

Solubilité (g/100 ml) = (treillis métallique de 400 mailles contenant un polymère avant immersion (g) - treillis métallique de 400 mailles contenant un polymère après immersion (g)) x 2 ;

- le poids moléculaire moyen en nombre du polymère (A) est mesuré par chromatographie par perméation de gel ;
- le diamètre de particule est mesuré à l'aide d'un appareil de mesure dynamique de distribution de diamètre de particule à diffusion de lumière.

2. Agent d'impression textile selon la revendication 1, dans lequel le polymère (A) est un polymère représenté par la formule générale (1) suivante :

[Chimie. 1]

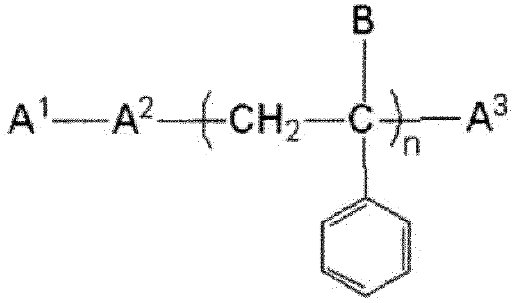

(1)

dans laquelle $A^1$ représente un résidu d'initiateur d'organolithium, $A^2$ représente un bloc polymère d'un monomère ayant un cycle aromatique ou un hétérocycle, $A^3$ représente un bloc polymère ayant un groupe anionique, n représente un entier de 1 à 5, et B représente un groupe aromatique ou un groupe alkyle.

**3.** Agent d'impression textile selon la revendication 1 ou 2, dans lequel le polymère (A) a un indice d'acide de 40 à 400 mg KOH/g,
dans lequel l'indice d'acide du polymère (A) est mesuré conformément au procédé de test JIS K 0070-1992.

**4.** Agent d'impression textile selon l'une quelconque des revendications 1 à 3, dans lequel le polymère (A) est un polymère anionique vivant produit en utilisant un microréacteur.

**5.** Agent d'impression textile selon l'une quelconque des revendications 1 à 4, dans lequel la résine de liant est une résine uréthane ou une résine acrylique.

**6.** Article en tissu qui est imprimé avec l'agent d'impression textile selon l'une quelconque des revendications 1 à 5.

**7.** Procédé de production d'un agent d'impression textile, comprenant, dans cet ordre, l'étape d'obtention d'une dispersion contenant un polymère (A), un composé basique, un solvant organique hydrosoluble, et un pigment de métallophtalocyanine polyhalogénée ou un pigment de dicétopyrrolopyrrole, dans lequel le polymère (A) a un groupe anionique, une solubilité dans l'eau de 0,1 g/100 ml ou moins, et un poids moléculaire moyen en nombre de 1 000 à 6 000, et qui forme de fines particules d'un diamètre de 5 à 1 000 nm dans de l'eau lorsque le polymère (A) est neutralisé de telle sorte que le taux de neutralisation du groupement anionique par un composé basique soit de 100%; l'étape de mélange de la dispersion avec de l'eau pour obtenir une dispersion pigmentaire aqueuse ; et l'étape de mélange de la dispersion pigmentaire aqueuse, d'un solvant diluant, d'une résine de liant et d'un additif ; dans lequel la solubilité du polymère (A) dans de l'eau, le poids moléculaire moyen en nombre du polymère (A) et le diamètre de particule sont déterminés par les procédés spécifiés dans la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007332523 A
- JP 2009215506 A
- JP 2012251062 A
- JP 8183920 A
- JP 2008195769 A
- JP 10007955 A
- WO 9905230 A
- JP 2011074321 A
- JP 2015113366 A
- JP 2014136709 A
- JP 2012207106 A
- US 2011292113 A1
- WO 2015072339 A1
- JP 2015105361 A


### Non-patent literature cited in the description


- Synthesis of Organic Compounds (Yuukikagoubutsu no Gousei) IV. Lecture on Experimental Chemistry (Jikken Kagaku Kouza). vol. 16